# EUROPEAN PATENT SPECIFICATION

(11) **EP 4 217 828 B1**
(45) Date of publication and mention of the grant of the patent: **05.11.2025**
(21) Application number: 20788966.8
(22) Date of filing: 22.09.2020
(51) Int. Cl.: G06F 3/01, G06F 21/32, G06F 21/62, G06V 40/13, G06V 40/12, G06V 40/60

(54) **GUIDING FINGERPRINT SENSING VIA USER FEEDBACK**
FÜHRUNG VON FINGERABDRUCKERFASSUNG ÜBER BENUTZERFEEDBACK
GUIDAGE DE DÉTECTION D'EMPREINTE DIGITALE PAR RETOUR UTILISATEUR

(43) Date of publication of application: 02.08.2023
(73) Proprietor: Google LLC, Mountain View, CA 94043 (US)
(72) Inventor: JENSON, Scott, Mountain View, California 94043 (US); WANG, Jianxun, Mountain View, California 94043 (US); MUKHERJEE, Debanjan, Mountain View, California 94043 (US); ZHAI, Shumin, Mountain View, California 94043 (US)
(74) Representative: Anderson, Oliver Ben
(86) International application number: PCT/US2020/070565
(87) International publication number: WO 2022/066197

(56) References cited:
- US-A1- 2014 176 332
- US-A1- 2014 292 668
- US-A1- 2016 062 465
- US-A1- 2019 303 640
- US-A1- 2020 241 644
- US-A1- 2020 293 737

## Description

### BACKGROUND

Many existing computing devices, including mobile computing devices, may be configured to authenticate a user before allowing the user to unlock or otherwise access applications provided by these devices. In various instances, a computing device may require that a user enter a password for purposes of authentication. In some cases, if a computing device includes a fingerprint sensor, the device may require that a user place the user's finger at the fingerprint sensor as part of a fingerprint authentication process. Once the device authenticates the user based on a captured image of the user's fingerprint, the device may perform an unlock operation or may otherwise provide the user with access to applications included on the device.

US 2020/0241644 A1 discloses an electronic device that receives, at an application-independent module, user interface information from an application. The user interface information corresponds to one or more displayed user interface elements with one or more dimensions defined by an application-specific module of the application. The electronic device receives an input directed toward one or more of the displayed user interface elements, and, at the application-independent module, determines one or more tactile outputs to be generated based on a magnitude of the input and the one or more dimensions defined by the applications-specific module. Using the one or more tactile output generators, the electronic device generates the determined one or more tactile outputs.

US2014/176332 A1 discloses a device which includes both a fingerprint sensor and a piezo structure. The fingerprint sensor senses fingerprint data identifying a pattern of a fingerprint of a user. The fingerprint data for the user can be collected and analyzed in various manners in order to authenticate the sensed fingerprint. The piezo structure can be used in various manners, such as to collect data used to facilitate authenticating the sensed fingerprint data, to provide feedback to the user regarding when the fingerprint authentication process is complete, and/or to cause different types of vibration in order to facilitate sensing fingerprint data. Various additional feedback can also be provided to the user, using the piezo structure or other feedback mechanisms, such as feedback to notify the user to increase or decrease an amount of pressure he or she is applying to the fingerprint sensor.

### SUMMARY

The matter for protection is defined by the claims.

The present disclosure is directed to techniques for providing an improved mechanism by which a computing device is configured to obtain an accurate and complete image of a user's fingerprint using a fingerprint sensor, thereby reducing or eliminating the possibility that a user will prematurely remove the user's finger from the fingerprint sensor before completion of the fingerprint sensing operation. Sensing of the user's fingerprint may be, in many cases, an integral part of the user's interaction with the computing device, and a successful fingerprint sensing operation may enable the computing device to perform certain operations, such as unlocking the device, providing access to certain applications on the device, and/or providing authorization for electronic payments, to name only a few examples. As such, not only may various implementations of the described techniques improve efficiency by reducing instances of unsuccessful or incomplete fingerprint sensing operations, but they may also assist the user in more effectively performing the technical task of controlling a user device to perform certain operations, such as the example operations listed above.

According to the disclosed techniques, the computing device may initiate the fingerprint sensing operation and output a sequence of haptic signals of varying (e.g., increasing) intensity over a period of time. In some cases, these haptic signals are perceived effectively by a user when they are short in duration (e.g., short haptic pulses) and are separated from one another by short pause periods of constant or variable duration. In these cases, and when the signals comprise, e.g., low-amplitude pulses, the user may perceive these rapid, sequential pulses as a continuous (e.g., increasing) haptic event. Upon completion of the fingerprint sensing operation, the computing device may then output a discrete, high-intensity haptic signal to indicate a successful completion of the fingerprint sensing operation, and that the user may lift the user's finger from the fingerprint sensor. The output of such haptic signals results in corresponding physiological responses that are detected by the user's finger that is positioned at the fingerprint sensor to effectively indicate that the user may lift the user's finger from the fingerprint sensor after successful completion of the fingerprint sensing operation. In some cases, the computing device may also utilize a corresponding visual effect that is output for display in conjunction with the haptic signals to confirm to the user a successful completion of the fingerprint sensing operation. In such fashion, the disclosed techniques may improve the ability of the computing device to obtain an accurate and complete fingerprint image without multiple fingerprint sensing attempts, thereby potentially improving the fingerprint recognition efficiency provided by the computing device, as well as processing and power efficiency.

In one example, a method includes, responsive to determining that a finger of a user is positioned at a fingerprint sensor, initiating, by a computing device, a fingerprint sensing operation that is associated with the fingerprint sensor, outputting, by the computing device and over a defined period of time, a sequence of haptic signals with varying intensity, wherein each haptic signal in the sequence has an intensity that is different than a respective intensity of any haptic signal that was previously output in the sequence, obtaining, by the computing device and from the fingerprint sensor, fingerprint data associated with a fingerprint of the finger of the user, and determining, by the computing device, whether the finger of the user is still positioned at the fingerprint sensor upon completion of the fingerprint sensing operation. Responsive to determining that the finger of the user is still positioned at the fingerprint sensor upon completion of the fingerprint sensing operation, the example method further includes outputting, by the computing device, a discrete haptic signal to indicate a successful completion of the fingerprint sensing operation.

In another example, a computing device includes at least one processor and a computer-readable storage device configured to store instructions that are executable by the at least one processor to: responsive to determining that a finger of a user is positioned at a fingerprint sensor, initiate a fingerprint sensing operation that is associated with the fingerprint sensor; output, over a defined period of time, a sequence of haptic signals with varying intensity, wherein each haptic signal in the sequence has an intensity that is different than a respective intensity of any haptic signal that was previously output in the sequence; obtain, from the fingerprint sensor, fingerprint data that is associated with a fingerprint of the finger of the user; determine whether the finger of the user is still positioned at the fingerprint sensor upon completion of the fingerprint sensing operation; and responsive to determining that the finger of the user is still positioned at the fingerprint sensor upon completion of the fingerprint sensing operation, output a discrete haptic signal to indicate a successful completion of the fingerprint sensing operation.

In another example, a computer-readable storage device storing instructions that, when executed, cause at least one processor of a computing device to perform operations. These example operations include, responsive to determining that a finger of a user is positioned at a fingerprint sensor, initiating a fingerprint sensing operation that is associated with the fingerprint sensor, outputting, over a defined period of time, a sequence of haptic signals with varying intensity, wherein each haptic signal in the sequence has an intensity that is different than a respective intensity of any haptic signal that was previously output in the sequence, and obtaining, from the fingerprint sensor, fingerprint data that is associated with a fingerprint of the finger of the user. The example operations further include determining whether the finger of the user is still positioned at the fingerprint sensor upon completion of the fingerprint sensing operation, and, responsive to determining that the finger of the user is still positioned at the fingerprint sensor upon completion of the fingerprint sensing operation, outputting a discrete haptic signal to indicate a successful completion of the fingerprint sensing operation.

The details of one or more examples are set forth in the accompanying drawings and the description below. Other features, objects, and advantages of the disclosure will be apparent from the description and drawings, and from the claims.

### BRIEF DESCRIPTION OF DRAWINGS

FIG. 1 is a conceptual diagram illustrating an example computing device that is configured to output haptic signals of varying intensity during a fingerprint sensing operation, in accordance with one or more aspects of the present disclosure.
FIG. 2 is a conceptual diagram illustrating an example computing device that is configured to output haptic signals of varying intensity, as well as corresponding visual images, during a fingerprint sensing operation, in accordance with one or more aspects of the present disclosure.
FIG. 3 is a conceptual diagram illustrating another example computing device that is configured to output haptic signals of varying intensity during a fingerprint sensing operation, in accordance with one or more aspects of the present disclosure.
FIG. 4 is a block diagram illustrating an example computing device, in accordance with one or more aspects of the present disclosure.
FIG. 5 is a graph diagram illustrating an output of haptic signals over time with varying intensity, in accordance with one or more aspects of the present disclosure.
FIGS. 6A-6D are screen diagrams of an example computing device that is configured to output haptic signals of increasing intensity, as well as corresponding visual images, during a fingerprint sensing operation, in accordance with one or more aspects of the present disclosure.
FIGS. 7A-7D are screen diagrams of another example computing device that is configured to output haptic signals of increasing intensity, as well as corresponding visual images, during a fingerprint sensing operation, in accordance with one or more aspects of the present disclosure.
FIG. 8 is a flow diagram illustrating example operations of a computing device, in accordance with one or more aspects of the present disclosure.

### DETAILED DESCRIPTION

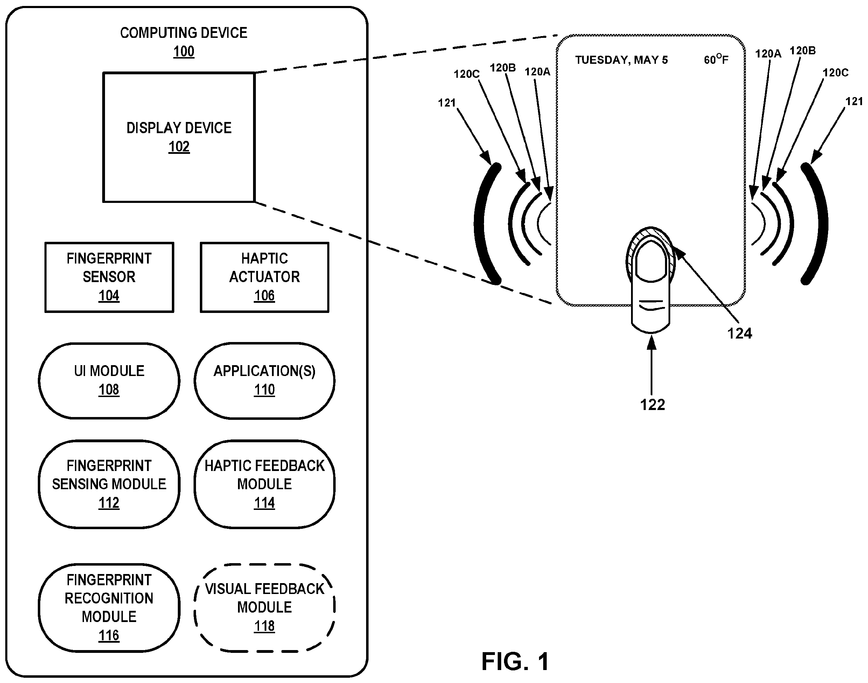

FIG. 1 is a conceptual diagram illustrating an example computing device 100 that is configured to output haptic signals of varying (e.g., increasing) intensity during a fingerprint sensing operation, in accordance with one or more aspects of the present disclosure. Examples of computing device 100 may include, but are not limited to, a mobile phone, a tablet computer, a personal digital assistant (PDA), a laptop computer, a portable gaming device, a portable media player, a wearable computing device (e.g., a watch, a wrist-mounted computing device, a head-mounted computing device), a television platform, or other type of computing device. As will be described in further detail below, computing device 100 may be or include one or more processors. Computing device 100 includes a display device 102, a fingerprint sensor 104, and a haptic actuator 106, and computing device 100 may be configured to execute one or more applications 110.

As noted above, many existing computing devices, including mobile computing devices, may be configured to authenticate a user before allowing the user to unlock or otherwise access applications provided by these devices. In some cases, if a device includes a fingerprint sensor (e.g., fingerprint sensor 104), the device may require that a user place the user's finger on the fingerprint sensor as part of a fingerprint authentication process. Once the device authenticates the user, the device may, e.g., perform an unlock operation or may otherwise provide the user with access to applications included on, or services provided by, the device.

However, many fingerprint sensors perform fingerprint sensing (e.g., scanning) operations over a period of time before acquiring a complete or accurate image of the user's fingerprint. For instance, fingerprint sensors positioned underneath a display may perform sensing operations of anywhere from between 600-1100 milliseconds (ms). In many cases, the user may prematurely lift the user's finger from the fingerprint sensor before this period of time has lapsed, resulting in the fingerprint sensor acquiring an incomplete or inaccurate fingerprint image.

By utilizing one or more techniques of the present disclosure, computing device 100 may provide an improved mechanism by which computing device 200 is configured to obtain an accurate and complete image of a user's fingerprint using fingerprint sensor 104, thereby reducing or eliminating the possibility that a user will prematurely remove the user's finger 122 from fingerprint sensor 104 before completion of the fingerprint sensing operation. As will be described in further detail below, computing device 100 may initiate (e.g., using fingerprint sensing module 112) a fingerprint sensing operation and output (e.g., using haptic actuator 106 and/or haptic feedback module 114) a sequence of haptic signals of varying (e.g., increasing) intensity over a period of time. Upon completion of the fingerprint sensing operation, computing device 100 may then output a discrete, high-intensity haptic signal 121 to indicate a successful completion of the fingerprint sensing operation, and to further indicate that the user may lift the user's finger 122 from fingerprint sensor 104. The output of such haptic signals results in corresponding physiological responses that are detected by the user's finger 122 positioned at fingerprint sensor 104. In some examples, computing device 100 may determine that the fingerprint sensing operation is complete, and responsive to such a determination may output the discrete haptic signal 121 to indicate the successful completion of the fingerprint sensing operation.

As noted above, computing device 100 may output (e.g., using haptic actuator 106 and/or haptic feedback module 114) a sequence of haptic signals of varying intensity over a period of time. In certain cases, computing device 100 may output this sequence of haptic signals with increasing (e.g., continuously increasing) or accelerating intensity (e.g., accelerating amplitude or magnitude). In some cases, computing device 100 may output this sequence of haptic signals with varying intensity by changing the frequency or frequency spectrum of the haptic signals in the sequence, and/or by changing the perception of roughness of the haptic signals as perceived by the user. In general, the varying intensity of the haptic signals may be associated with any varying haptics characteristics associated with the haptic signals. In some instances, the intensity of the haptic signals may be measured in units of amplitude, magnitude, and/or frequency with respect to the associated vibrational waves. In some instances, intensity may be measured in units of acceleration with respect to the associated vibrational waves.

In various cases, computing device 100 may also output a sequence of visual images, in conjunction with outputting the haptic signals, during and/or after the fingerprint sensing operation. In these cases, computing device 100 may utilize a combination of low-level haptics and visuals to create an effect that enables the user to maintain the user's finger 122 positioned at fingerprint sensor 104 for a sufficient period of time in which fingerprint sensor 104 and/or fingerprint sensing module 112 can successfully complete the fingerprint sensing operation and obtain complete and accurate fingerprint data associated with the user's fingerprint.

In certain examples, haptic feedback module 114 may create an interactive and 'haptic texture' that fires once finger 122 is positioned at fingerprint sensor 104. This texture may be interactive with finger 122 and builds over time, such that haptic feedback module 114 drives haptic actuator 106 to output a sequence of haptic signals of varying (e.g., increasing) intensity over this time period. An optional visual feedback module 118 may output corresponding visual animation, such as a sequence of visual images of varying (e.g., increasing) intensity, while haptic feedback module 114 outputs the sequence of haptic signals of varying (e.g., increasing) intensity. As the visual animation nears completion, it may in various cases speed up or accelerate, thereby creating an interactive and visual 'snap' effect that (e.g., in conjunction with the high-intensity haptic signal in some cases) indicates a successful completion of the fingerprint sensing operation. Upon successful completion of the fingerprint sensing operation, computing device 100 may, for certain use cases, perform one or more of an unlock operation associated with unlocking computing device 100, or an access operation associated with accessing one or more of applications 110, to name only a few examples. In these examples, the haptic and visual effects may not be flat and static, but instead may build (e.g., continuously increase or accelerate) with effect or intensity (e.g., both visually and haptically), so that the user's senses are engaged with the 'snap' effect. In various cases, the use of the visual images in conjunction with the haptic signals may strengthen the overall user perception and experience with respect to this 'snap' effect. The user may, in some cases, be enabled to 'fuse' or combine the visual and haptic feedback into a single, perceived experience.

In such fashion, the disclosed techniques may improve the ability of computing device 100 to obtain an accurate and complete fingerprint image without multiple fingerprint sensing attempts, thereby potentially improving the fingerprint recognition efficiency provided by computing device 100, as well as processing and power efficiency. The disclosed techniques may potentially reduce the number of processing cycles or power usage of computing device 100 by reducing or eliminating multiple fingerprint sensing attempts.

The storage of user data, such as fingerprint data or identification information associated with a user, may only occur, in various examples, in response to computing device 100 (e.g., via UI module 108) receiving an affirmative consent from the user. UI module 108 may, for example, provide an explicit request to the user regarding the storage and subsequent use of such data, and computing device 100 may proceed to store the data only upon receiving (e.g., via UI module 108) an affirmative response and consent from the user.

Further to the descriptions above, a user may be provided with controls allowing the user to make an election as to both if and when systems, programs, or features described herein may enable collection and/storage of user information (e.g., fingerprint data, user preference data, user location data, user identification data), and/or if and when systems, programs, or features described herein may enable transmission of content or communications between devices. In addition, certain data may be treated in one or more ways before it is stored or used, so that identifiable information is removed. For example, a user's identity may be treated so that no identifiable information can be determined for the user, or a user's geographic location may be generalized where location information is obtained (such as to a city, ZIP code, or state level), so that a particular location of a user cannot be determined. Thus, the user may have control over what information is collected about the user, how that information is stored and/or used, and what information is provided to the user.

As shown in FIG. 1, computing device 100 includes display device 102. Display device 102 may function as an input device and/or an output device for computing device 100. Display device 102 may be implemented using various technologies. For instance, display device 102 may function as an input device using a presence-sensitive input device, such as a resistive touchscreen, a surface acoustic wave touchscreen, a capacitive touchscreen, a projective capacitance touchscreen, a presence-sensitive screen, an acoustic pulse recognition touchscreen, a presence-sensitive screen that detects motion via radar technology, or another presence-sensitive technology. Display device 102 may function as an output device using any of one or more display devices, such as a liquid crystal display (LCD), a dot matrix display, a light emitting diode (LED) display, an organic light-emitting diode (OLED) display, a micro light-emitting diode (microLED) display, an active matrix organic light-emitting diode (AMOLED) display, e-ink, or similar monochrome or color display capable of outputting visible information to a user of computing device 100.

As one example, display device 102 of computing device 100 may include a presence-sensitive screen that may receive tactile input from a user of computing device 100. Display device 102 may receive indications of the tactile input by detecting one or more gestures from a user of computing device 100 (e.g., the user touching or pointing to one or more locations of display device 102 with a finger or a stylus pen). The presence-sensitive screen of display device 102 may also present output to a user. Display device 102 may present the output as or in a graphical user interface, which may be associated with functionality provided by computing device 100. For example, display device 102 may present output associated with various user interfaces of applications 110 executing at computing device 100. A user may interact with a respective user interface of each of applications 110 to cause computing device 100 to perform operations relating to corresponding application functionality.

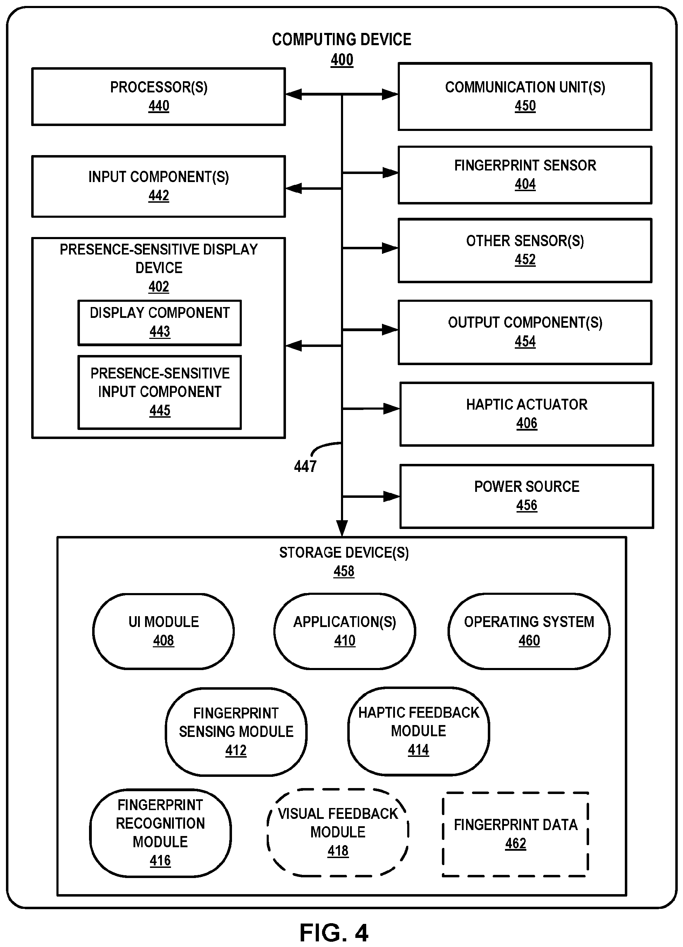

In some examples, computing device 100 may include one or more communication units (such as shown in FIG. 4). These communication units may send data to and/or receive data from one or more other computing devices. In some examples, the communication units support wireless and/or wired communication, and they may send and/or receive data using any variety of communication protocols.

Computing device 100 may also include user interface ("UI") module 108, fingerprint sensing module 112, haptic feedback module 114, fingerprint recognition module 116, and an optional visual feedback module 118, which may individually or collectively perform operations described herein using any combination of software, hardware, and/or firmware residing in and/or executing at computing device 100. Computing device 100 may execute applications 110 and modules 108, 112, 114, 116, 118 using one or more processors. Computing device 100 may, in some cases, execute applications 110 and/or modules 108, 112, 114, 116, 118 as one or more virtual machines executing on underlying hardware. In some cases, any of applications 110 and/or modules 108, 112, 114, 116, 118 may be implemented as a downloadable or pre-installed application or "app." In some examples, one of more of these may execute as a service of an operating system or computing platform.

Applications 110 of computing device 100 may perform various functions or access one or more services for computing device 100. An e-mail application, a camera application, a calendar application, a messaging application, a social media application, a travel application, a game application, a stock application, and a weather application are all examples of applications 110. UI module 108 may cause display device 102 to present a graphical user interface to a user. For example, the graphical user interface may include graphical elements (e.g., indications) displayed at various locations of display device 102.

UI module 108 may, in some cases, act as an intermediary between various components of computing device 100 to make determinations based on input detected by display device 102 and to generate output presented by display device 102. For instance, UI module 108 may receive information from display device 102 related to input detected by display device 102 and transmit the input information to one or more of applications 110. UI module 108 may also receive information from, or provide content to, applications 110 and/or modules 108, 112, 114, 116, 118.

As indicated above, by utilizing one or more techniques of the present disclosure, computing device 100 may provide an improved mechanism by which it is configured to obtain an accurate and complete image of a user's fingerprint using fingerprint sensor 104, thereby reducing or eliminating the possibility that a user will prematurely remove the user's finger from fingerprint sensor 104 before completion of the fingerprint sensing operation. As noted above, fingerprint sensor 104 may be located at a portion of computing device 100. Computing device 100 includes a front portion, a back portion that is opposite from the front portion, and one or more side portions. Display device 102 (e.g., a presence-sensitive display device) may be provided on the front portion. In some cases, display device 102 may be provided on the back portion. In some cases, display device 102 may comprise multiple display devices (e.g., dual or foldable display devices) provided on one or more portions of computing device 100, such as on one or more of the front portion, the back portion, or at least one side portion. In various examples, fingerprint sensor 104 is provided on either the front portion of computing device 100 (e.g., underneath display device 102), or on one or more side portions of computing device 100 (e.g., as part of a solid-state button). In other examples, fingerprint sensor 104 is provided on the back portion of computing device 100. In the example of FIG. 1, fingerprint sensor 104 is provided on the front portion of computing device 100.

Display device 102, which is also provided on the front portion, may display various display information (e.g., date, time, temperature information, as indicated in FIG. 1). As also shown in FIG. 1, display device 102 may also display graphical information 124 (e.g., a graphical fingerprint icon having a shape of a fingerprint) at a region or area of display device 102 that is associated with fingerprint sensor 104. For example, graphical information 124 may be output at display device 102 at a region that is positioned above fingerprint sensor 104, which is located below display device 102. Graphical information 124 may indicate where the user is to position finger 122 during a fingerprint sensing operation. In certain examples, display device 102 is configured as an always-on display, where display device 102 displays certain information (e.g., date/time/temperature information and/or graphical information 124) while computing device 100 is powered on. Finger 122 may be any finger of the user, located on either the right or left hand.

At any point in time, a user of computing device 100 may wish to initiate the performance of one or more operations by computing device 100 (e.g., an unlock operation associated with unlocking computing device 100, an access operation associated with accessing one or more of applications 110). To initiate the performance of such operations, computing device 100 may require an authentication of the user via one or more fingerprint sensing operations. As a result, the user may position a finger 122 at fingerprint sensor 104.

Fingerprint sensing module 112 may determine (e.g., based on input from display device 102 and/or fingerprint sensor 104) when finger 122 of the user is positioned at fingerprint sensor 104. For instance, display device and/or fingerprint sensor 104 may determine (e.g., during execution of fingerprint sensing module 112) a presence of finger 122 when finger 122 contacts fingerprint sensor 104 or is otherwise within a defined distance of (e.g., proximate to) fingerprint sensor 104.

In response to fingerprint sensing module 112 determining that the user's finger 122 is positioned at fingerprint sensor 104, fingerprint sensing module 112 may initiate a fingerprint sensing operation that is associated with fingerprint sensor 104. As noted earlier, in various cases, a fingerprint sensing operation may execute for a defined period of time (e.g., 600-1100 ms), which is the period of time to acquire complete and accurate fingerprint image data from fingerprint sensor 104. In order, then, to acquire such fingerprint image data, the user should keep the user's finger 122 positioned at fingerprint sensor 104 during this period of time, which may be a variable period of time that is based on fingerprint sensor 104 (e.g., the type or model of fingerprint sensor 104). For instance, fingerprint sensor 104 may comprise one of an optical scanner, a capacitive scanner, or an ultrasonic scanner. The fingerprint data may comprise any type of data representing the fingerprint of the finger of the user. For example, the fingerprint data may be provided by one of an optical scanner, a capacitive scanner, or an ultrasonic scanner, and this data may indicate a two- or three-dimensional representation of the fingerprint.

In certain examples, fingerprint sensing module 112 may be configured to determine a fingerprint sensing time period for completion of the fingerprint sensing operation. For instance, fingerprint sensing module 112 may determine such a fingerprint sensing time period based or dependent on, e.g., the type of fingerprint sensor 104. Some types of fingerprint sensors may be operable to obtain a complete fingerprint image in a shorter amount of time than others. After determining the fingerprint sensing time period, fingerprint sensing module 112 may then be configured to determine, based on this fingerprint sensing time period, the defined period of time over which haptic feedback module 114 outputs the sequence of haptic signals 120A, 120B, 120C with increasing intensity. In many cases, this defined period of time may be the same as the fingerprint sensing time period. In certain cases, fingerprint sensing module 112 may select the defined period of time to be slightly longer than the fingerprint sensing time period, such that haptic feedback module 114 outputs one or more of haptic signals 120A, 120B, 120C even after the fingerprint sensing time period has lapsed. In some cases, fingerprint sensing module 112 may select the defined period of time to be slightly shorter than the fingerprint sensing time period, such that haptic feedback module 114 outputs a discrete haptic signal 121 at the end of the fingerprint sensing time period.

As indicated above, upon initiation of the fingerprint sensing operation by fingerprint sensing module 112, computing device 100 may execute haptic feedback module 114 to output, over this defined period of time and using haptic actuator 106, a sequence of haptic signals 120A, 120B, 120C with increasing intensity, to provide a physiological response that is detected by the user's finger 122, indicating that the user is to maintain the finger 122 at fingerprint sensor 104 for this period of time. Haptic actuator 106 is configured to output haptic signals from computing device 100 (e.g., haptic signals that cause one or more vibrations of computing device 100). In some examples, haptic actuator 106 may comprise one of an eccentric rotating mass motor, a linear resonant actuator, a piezoelectric actuator, or a forced impact actuator.

The sequence of haptic signals 120A, 120B, 120C are illustrated in FIG. 1, which indicates the output of these haptic signals over time. Haptic feedback module 114 activates haptic actuator to output haptic signal 120A as the first haptic signal in the sequence, followed by haptic signal 120B, and then followed by haptic signal 120C in time. Each haptic signal in the sequence has an intensity (e.g., vibrational intensity) that is different (e.g., greater) than a respective intensity of any haptic signal that was previously output in the sequence. Thus, haptic signal 120B has a greater haptic intensity than haptic signal 120A. Haptic signal 120C has a greater haptic intensity than each of haptic signals 120A and 120B. In certain examples, haptic feedback module 114 activates haptic actuator 106 to output the sequence of haptic signals 120A, 120B, 120C with not only increasing intensity, but also accelerating intensity, to produce an even more pronounced physiological response (e.g., vibration response) as detected by finger 122.

Haptic signals 120A, 120B, 120C may cause respective vibrations of computing device 100, which may be detected by finger 122. Because this sequence of haptic signals have increasing intensity over time, the user's finger 122 may detect an increasing vibrational intensity of one or more portions of computing device 100 that are caused by these haptic signals, indicating that the user is to maintain finger 122 at fingerprint sensor 104 while fingerprint sensing module 112 performs the fingerprint sensing operation.

In certain examples, haptic feedback module 114 may output the sequence of haptic signals 120A, 120B, 120C as short haptic pulses, separated by pauses in time during which no haptic pulses are output. In some cases, these haptic signals 120A, 120B, 120C are perceived effectively by a user when they are short in duration (e.g., short haptic pulses) and are separated from one another by short pause periods of constant or variable duration. In these cases, and when signals 120A, 120B, 120C comprise, e.g., low-amplitude pulses, the user may perceive these rapid, sequential pulses as a continuous (e.g., increasing) haptic event.

For instance, each of haptic signals 120A, 120B, 120C may comprise a haptic pulse of a short duration (e.g., 4 ms), and haptic feedback module 114 may output each of the sequence of haptic signals 120A, 120B, 120C as a respective haptic pulse of this short duration. Haptic feedback module 114 may first output haptic signal 120A for this short duration, followed by a pause period during which haptic feedback module 114 refrains from outputting any haptic signals. After the pause period, haptic feedback module 114 may then output haptic signal 120B for this short duration, followed again by another pause period when haptic feedback module 114 again refrains from outputting any haptic signals. Haptic signal 120B has a greater haptic intensity than haptic signal 120A. Haptic feedback module 114 may then output haptic signal 120C for the short duration, where haptic signal 120C has a greater haptic intensity than each of haptic signals 120A and 120B. In many cases, the inclusion of these pause periods may result in an enhanced physiological response associated with haptic signals 120A, 120B, 120C as detected by finger 122.

In some cases, these pause periods may have a constant duration in between haptic signals. In other cases, the pause periods may have variable duration. For example, these pause periods that occur between respective haptic signals 120A, 120B, 120C in the sequence may decrease in duration over the defined period of time during which haptic signals 120A, 120B, 120C are output, such that these haptic signals may comprise haptic pulses that are output with varying intensity and also increasing speed (e.g., due to shorter pause periods over the defined period of time). For example, haptic feedback module 114 may refrain from outputting any haptic signals during a first pause period that occurs between the output of haptic signals 120A and 120B. Haptic feedback module 114 may also refrain from outputting any haptic signals during a second pause period that occurs between the output of haptic signals 120B and 120C. In some cases, the second pause period may be equal to the first pause period. However, in other cases, the second pause period may be shorter in duration than the first pause period. As a result, in these cases, haptic feedback module 114 may output haptic signals 120A, 120B, 120C with varying intensity and increasing speed.

Haptic feedback module 114 outputs this sequence of haptic signals while fingerprint sensing module 112 performs the fingerprint sensing operation over the defined period of time (e.g., 600-1100 ms for completing the sensing operation). Fingerprint sensing module 112 may obtain, from fingerprint sensor 104, fingerprint data associated with a fingerprint of finger 122. In some cases, fingerprint sensing module 112 may obtain at least a portion of this fingerprint data during the defined period of time when haptic feedback module 114 outputs the sequence of haptic signals.

Fingerprint sensing module 112 may determine (e.g., based on input from display device 102 and/or fingerprint sensor 104) whether finger 122 of the user is still positioned at fingerprint sensor 104 upon completion of the fingerprint sensing operation. If finger 122 is still positioned at fingerprint sensor 104, haptic feedback module 114 may activate haptic actuator 106 to output a discrete haptic signal 121. In some cases, discrete haptic signal 121 may have a haptic intensity that is different (e.g., greater) than the respective intensity of any haptic signal included in the sequence of haptic signals. Thus, in these cases, discrete haptic signal 121 provides a high-intensity haptic pulse that has a greater intensity (e.g., by a factor of three or more) than any of haptic signals 120A, 120B, 120C in the sequence previously output by haptic feedback module 114. Haptic feedback module 114 outputs discrete haptic signal 121 to indicate to the user a successful completion of the fingerprint sensing operation. In some cases, a discrete haptic signal may create a physiological response of a 'snap' effect as detected by finger 122. In such fashion, haptic feedback module 114 may output the sequence of haptic signals 120A, 120B, 120C with increasing intensity to provide a ramping, textural and physiological response detected by finger 122, indicating to the user that the user should keep finger 122 positioned at fingerprint sensor 104 during the fingerprint sensing operation. Upon haptic feedback module 114 subsequently outputting discrete haptic signal 121, finger 122 may detect a distinct physiological response indicating that the fingerprint sensing operation is complete, and that the user may raise or remove finger 122 from fingerprint sensor 104. As a result, the user may wait until finger 122 senses this discrete physiological response associated with discrete haptic signal 121 before raising or removing finger 122.

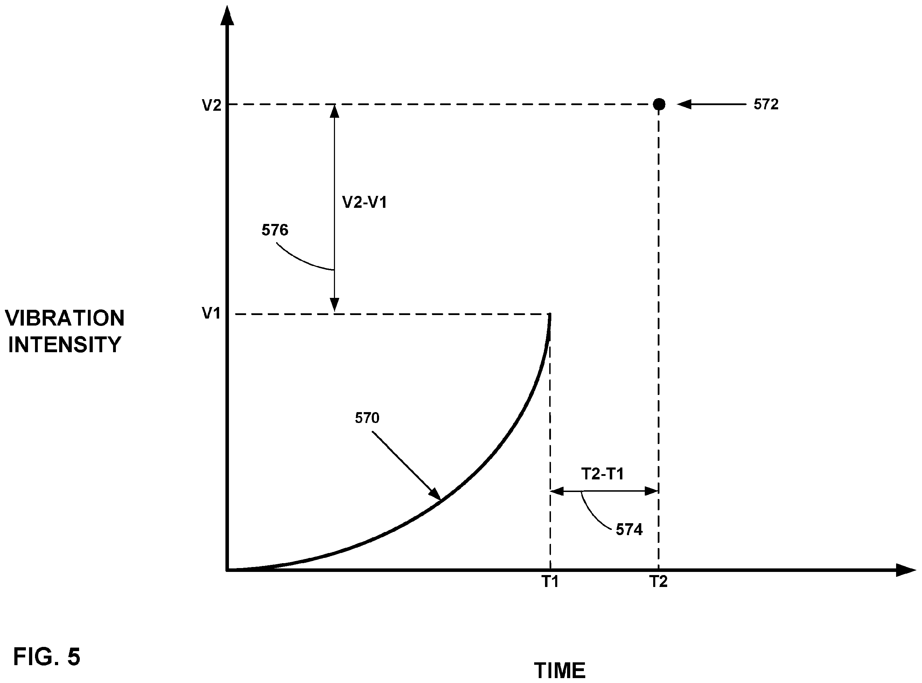

In various examples, after outputting the sequence of haptic signals 120A, 120B, 120C with increasing intensity, haptic feedback module 114 may be configured to refrain, for a second defined period of time, from outputting any haptic signals prior to outputting discrete haptic signal 121 (as illustrated in FIG. 5). In this way, haptic feedback module 114 may again introduce another yet separate pause period between the outputting of haptic signals 120A, 120B, 120C and the outputting of discrete haptic signal 121. In many cases, the inclusion of this pause or gap period may result in an enhanced physiological response associated with discrete haptic signal 121 that is detected by finger 122. In some cases, finger 122 is capable of sensing discrete haptic signal 121 with a stronger or more discernable physiological response when haptic feedback module 114 includes this pause period after outputting the sequence of haptic signals 120A, 120B, 120C with increasing intensity, and prior to outputting discrete haptic signal 121. In various cases, the inclusion of this pause or gap period may at least in part allow the nerves in the user's finger 122 to recover from the effects of the initial haptic signals 120A, 120B, 120C, which in turn allows the user to more easily discern the subsequent (and in some cases, higher intensity) discrete haptic signal 121 with a stronger or more discernable physiological response, which indicates that the fingerprint sensing operation has successfully completed and that the user may now remove finger 122 from fingerprint sensor 104.

In some examples, after initiation of the fingerprint sensing (e.g., scanning) operation, fingerprint sensing module 112 may complete the fingerprint sensing operation (e.g., over a period of 600-1100 ms, depending on the type of fingerprint sensor 104), and, upon completion of the fingerprint sensing operation, fingerprint sensing module 112 may determine whether finger 122 is still positioned at fingerprint sensor 104. Responsive to fingerprint sensing module 112 determining that finger 122 is still positioned at fingerprint sensor 104 upon completion of the fingerprint sensing operation, haptic feedback module 114 may output discrete haptic signal 121 to indicate a successful completion of the fingerprint sensing operation.

In other examples, after initiation of the fingerprint sensing (e.g., scanning) operation, fingerprint sensing module 112 may determine whether finger 122 is still positioned at fingerprint sensor 104 at one or more points in time during execution of the fingerprint sensing operation. Responsive to fingerprint sensing module 112 determining that finger 122 is still positioned at fingerprint sensor 104 upon completion of the fingerprint sensing operation, haptic feedback module 114 may output discrete haptic signal 121 to indicate a successful completion of the fingerprint sensing operation. In these examples, haptic feedback module 114 may output discrete haptic signal 121 responsive to fingerprint sensing module 112 determining that the fingerprint sensing operation is complete, given that fingerprint sensing module 112 has determined that finger 122 is positioned at fingerprint sensor 104 during and at the completion of the fingerprint sensing operation.

In certain examples, however, responsive to fingerprint sensing module 112 determining that finger 122 is no longer positioned at fingerprint sensor 104 prior to or upon completion of the fingerprint sensing operation, haptic feedback module 114 may output multiple discrete haptic signals of varying intensity (not shown in FIG. 1). The output of these multiple discrete signals of varying intensity may indicate an unsuccessful completion of the fingerprint sensing operation (e.g., an incomplete and/or unsuccessful fingerprint sensing operation).

Assuming that finger 122 is still positioned at fingerprint sensor 104 upon completion of the fingerprint sensing operation, haptic feedback module 114 outputs haptic signal 121. After haptic feedback module 114 outputs haptic signal 121, and fingerprint sensing module 112 obtains the fingerprint data associated with the fingerprint of finger 122, fingerprint recognition module 116 may attempt to match the fingerprint data with reference fingerprint data for an enrolled user. For example, fingerprint recognition module 116 may have previously obtained reference fingerprint data associated with one or more fingerprints of fingers of one or more enrolled users. In some cases, fingerprint recognition module 116 may obtain this reference data from an external device. In other cases, fingerprint recognition module 116 may obtain this reference data from fingerprint sensing module 112 during a prior training or enrollment phase, when fingerprint sensor 104 and fingerprint sensing module 112 obtain such reference data from the fingers of one or more enrolled users, using a process similar to that described above.

At a later point, fingerprint recognition module 116 may attempt to match the fingerprint data (e.g., fingerprint image data) associated with the fingerprint of finger 122 with reference fingerprint data (e.g., reference fingerprint image data) for a previously enrolled user. Fingerprint recognition module 116 may compare such image data in an attempt to determine a match. Responsive to fingerprint recognition module 116 determining a match between the reference fingerprint data associated with a fingerprint of a particular enrolled user and the fingerprint data associated with the fingerprint of finger 122, fingerprint recognition module 116 may authenticate the user having finger 122. In response to authenticating the user, computing device 100 may perform one or more operations. For instance, computing device 100 may, for certain use cases, perform one or more of an unlock operation associated with unlocking computing device 100, or an access operation associated with accessing one or more of applications 110, to name only a few examples.

In some instances, it is possible that the user may lift finger 122 away from fingerprint sensor 104 before fingerprint sensing module 112 has completed the fingerprint sensing operation. In these instances, for one or more reasons, the user may lift finger 122 before haptic feedback module 114 has output discrete haptic signal 121, which is a haptic signal indicating that the fingerprint sensing operation has completed. In these cases, fingerprint sensing module 112 may be unable to obtain complete or accurate fingerprint data associated with the fingerprint of finger 122 during the fingerprint sensing operation. As a result, when fingerprint sensing module 112 determines (e.g., based on feedback from display device 102 and/or fingerprint sensor 104) that finger 122 is no longer positioned at fingerprint sensor 104 prior to or upon completion of the fingerprint sensing operation, haptic feedback module 114 may output multiple discrete haptic signals of varying intensity (not illustrated in FIG. 1) to indicate an unsuccessful completion of the fingerprint sensing operation (e.g., an unsuccessful and/or incomplete fingerprint sensing operation). For instance, in some cases, haptic feedback module 114 may output multiple discrete haptic signals, similar to haptic signal 121, but with different intensities. As one example, haptic feedback module 114 may output a first discrete haptic signal of a certain intensity, and then may subsequently output, after a pause period, a second discrete haptic signal of greater intensity than the first discrete haptic signal. By outputting multiple discrete haptic signals, rather than a single discrete haptic signal 121, haptic feedback module 114 provides the user with an indication that fingerprint sensing module 112 was unable to successfully complete the fingerprint sensing operation. As a result, the user may need to repeat the fingerprint sensing and authentication process.

In such fashion, the disclosed techniques may improve the ability of computing device 100 to obtain an accurate and complete fingerprint image without multiple fingerprint sensing attempts, thereby potentially improving the fingerprint recognition efficiency provided by computing device 100, as well as processing and power efficiency. The disclosed techniques may potentially reduce the number of processing cycles or power usage of computing device 100 by reducing or eliminating multiple fingerprint sensing attempts.

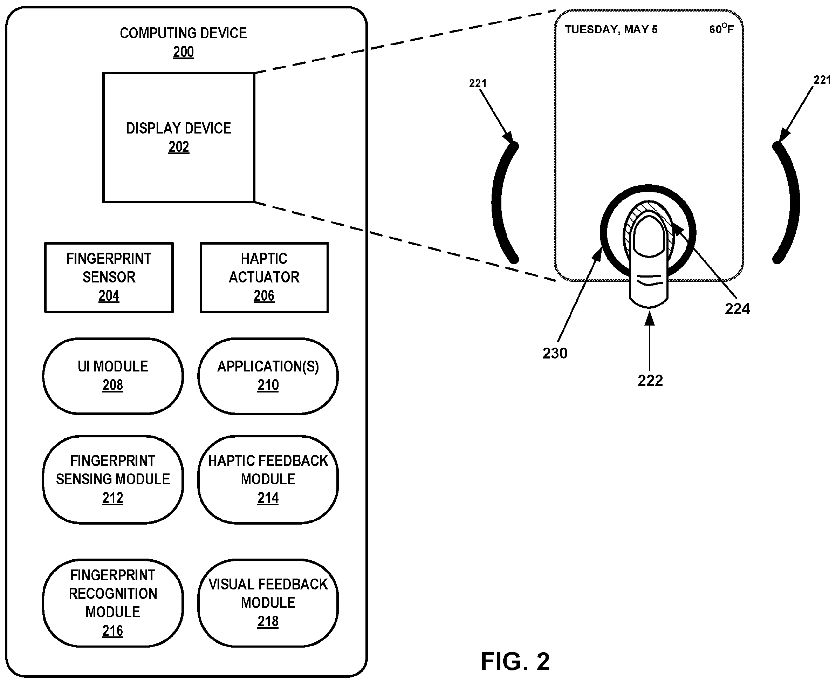

FIG. 2 is a conceptual diagram illustrating an example computing device 200 that is configured to output haptic signals of varying intensity, as well as corresponding visual images, during a fingerprint sensing operation, in accordance with one or more aspects of the present disclosure. Computing device 200 may comprise one example of computing device 100 illustrated in FIG. 1, where similarly numbered components may provide similar functions to those described in reference to FIG. 1.

Computing device 200 is similar to computing device 100 but further provides functionality to output visual effects using visual feedback module 218 during a fingerprint sensing operation. Haptic feedback module 214 may output haptic signals similar to haptic feedback module 114 described above, including the output of a discrete haptic signal 221 after a defined period of time, similar to discrete haptic signal 121. In addition, visual feedback module 218 may output a corresponding visual effect that is output for display in conjunction with the haptic signals to indicate when the user that fingerprint sensor 204 has successfully completed the fingerprint sensing operation. In these cases, computing device 200 may utilize a combination of low-level haptics and visuals to create an effect that enables the user to maintain the user's finger positioned at fingerprint sensor 204 for a sufficient period of time in which fingerprint sensor 204 and/or fingerprint sensing module 212 can complete the fingerprint sensing operation and obtain complete fingerprint data associated with the user's fingerprint.

For example, in various cases, while haptic feedback module 214 outputs a sequence of haptic signals with increasing intensity over a defined period of time, similar to that described above in reference to FIG. 1 for haptic feedback module 114, visual feedback module 218 may output, over the defined period of time, and for display at display device 202, a visual effect such as a visual animation comprising a sequence of visual images. For instance, visual feedback module 218 may first output a visual sequence of images over the defined period of time, which correspond to the sequence of haptic signals output by haptic signals output by haptic feedback module 214. In some cases, visual feedback module 218 may output the images in the visual sequence with increasing (e.g., continuously increasing or accelerating) intensity, such that each image in the visual sequence has a visual intensity that is different (e.g., greater) than a respective intensity of any image that was previously output in the visual sequence.

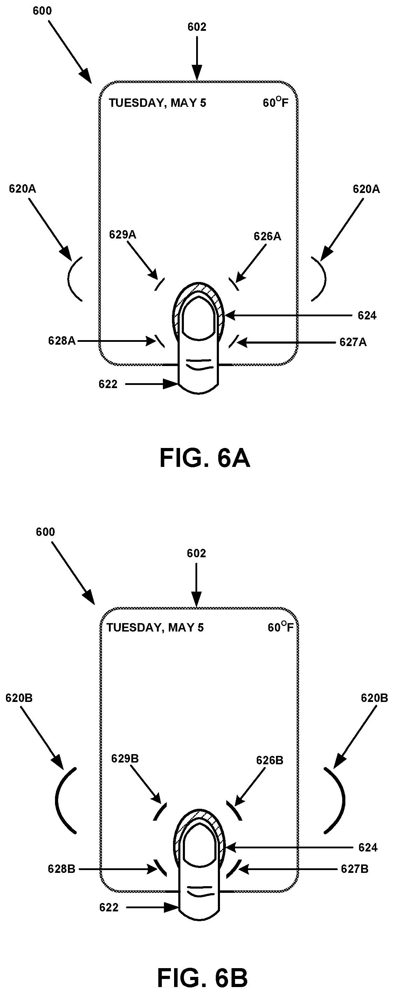

In some examples, visual feedback module 218 may output the visual sequence of images to form incomplete portions of a visual ring displayed around a region of display device 202 that is associated with fingerprint sensor 204, such as the region at which graphical information 224 is displayed. FIGS. 6A-6D illustrate such a sequence. Upon completion of the fingerprint sensing operation, fingerprint sensing module 212 may obtain, from fingerprint sensor 204, fingerprint data associated with a fingerprint of finger 222 if finger 222 is still positioned at fingerprint sensor 204. Haptic feedback module 214 may also output discrete haptic signal 221. While haptic feedback module 214 outputs this discrete haptic signal 221, visual feedback module 218 may also output a discrete image 230 comprising an entirety of the visual ring, indicating a successful completion of the fingerprint sensing operation. As the visual animation nears completion, it may in various cases speed up or accelerate, thereby creating a visual 'snap' effect when outputting discrete image 230 (e.g., in conjunction with the discrete haptic signal 221) to indicate a successful completion of the fingerprint sensing operation. Upon successful completion of the fingerprint sensing operation, computing device 200 may, for certain use cases, perform one or more of an unlock operation associated with unlocking computing device 200, or an access operation associated with accessing one or more of applications 210, to name only a few examples. In these examples, the haptic and visual effects may not be flat and static, but instead may build (e.g., continuously increase or accelerate) with effect or intensity (e.g., both visually and haptically) so that the user's senses are engaged with the 'snap' open effect.

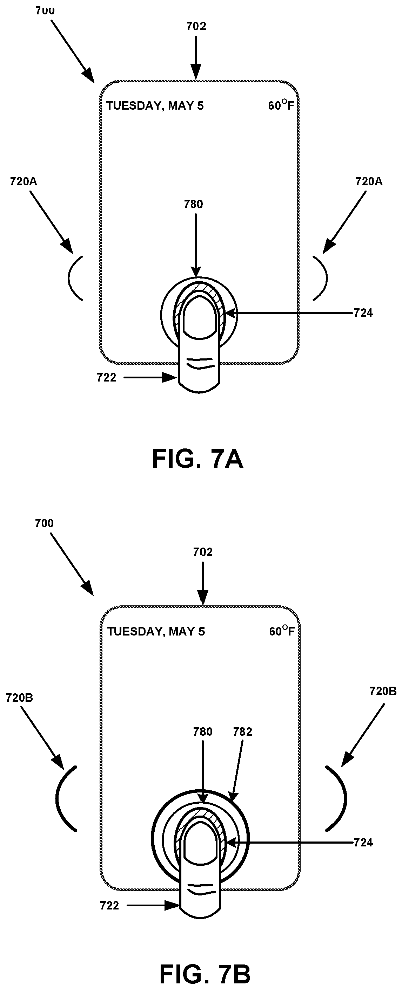

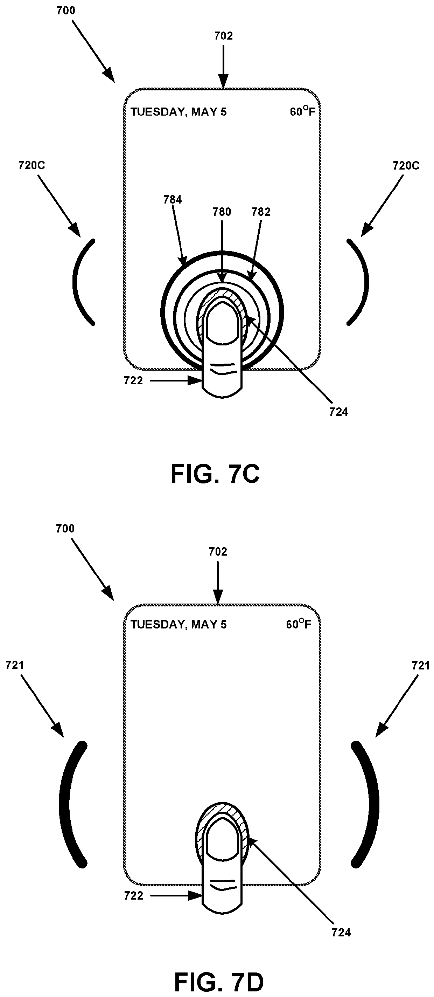

In an alternate example, such as illustrated in FIGS. 7A-7D, visual feedback module 218 outputs the visual sequence of images over the defined period of time at least by outputting the visual sequence of images to form concentric rings that are displayed around the region of display device 202 that is associated with fingerprint sensor 204 (e.g., the region corresponding to graphical information 224). In this example, haptic feedback module 214 subsequently outputs discrete haptic signal 221. However, while haptic feedback module 214 outputs discrete haptic signal 221, visual feedback module 218 refrains from outputting any images around this region of display device 202, such as indicated in FIG. 7D.

As noted above, computing device 200 may comprise one example of computing device 100 illustrated in FIG. 1, where similarly numbered components may provide similar functions to those described in reference to FIG. 1. For example, although not specifically described in reference to FIG. 2, UI module 208, applications 210, and fingerprint recognition module 216 may provide similar functions to those of UI module 108, applications 110, and fingerprint recognition module 116 described above in reference to FIG. 1.

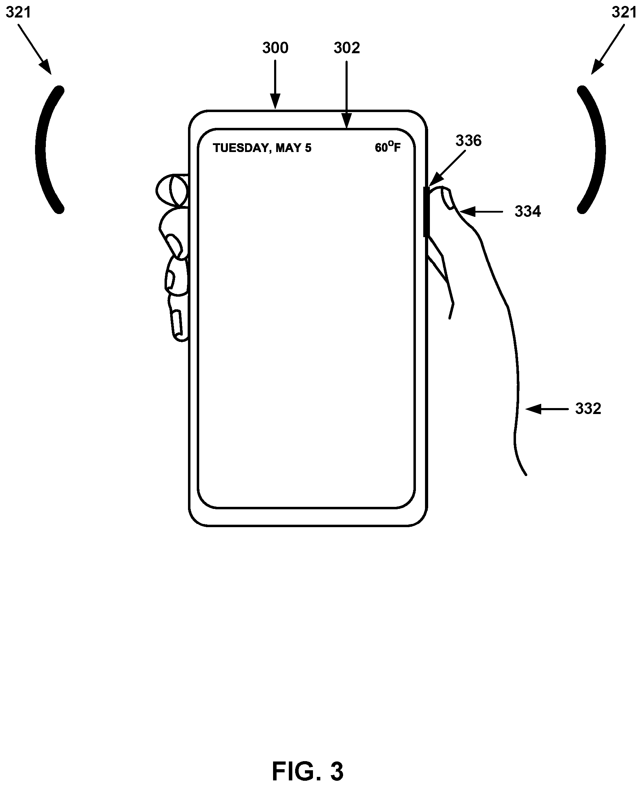

FIG. 3 is a conceptual diagram illustrating another example computing device 300 that is configured to output haptic signals of varying intensity during a fingerprint sensing operation, in accordance with one or more aspects of the present disclosure. In the examples of FIGS. 2-3, the respective fingerprint sensor was provided on the front portion of the computing device. However, in other examples such as the one illustrated in FIG. 3, the fingerprint sensor may be provided on a side portion.

As shown in FIG. 3, a fingerprint sensor 336 is provided on a side portion of computing device 300, rather than at or underneath display device 302. Fingerprint sensor 336 may function similarly to fingerprint sensor 104 (FIG. 1) and/or fingerprint sensor 204 (FIG. 2). For example, fingerprint sensor 336 may acquire fingerprint data associated with a fingerprint of finger 334 of a user during a fingerprint sensing operation. In the particular example of FIG. 3, finger 334 may be a thumb that is located on a right hand 332 of the user. In certain examples, fingerprint sensor 336 may be part of a solid-state button that is positioned on the indicated side portion of computing device 300.

Although not shown in FIG. 3, computing device 300 may also include a haptic actuator, a fingerprint sensing module, a haptic feedback module, and a fingerprint recognition module, similar to that shown and described in reference to FIG. 1 and/or FIG. 2. During a fingerprint sensing operation, the haptic feedback module may output a sequence of haptic signals of increasing intensity over a period of time, and the fingerprint sensing module may obtain fingerprint data from fingerprint sensor 336. Responsive to determining that finger 334 is still positioned at fingerprint sensor 336 upon completion of the fingerprint sensing operation, the haptic feedback module may output a discrete haptic signal 321 to indicate a successful completion to the fingerprint sensing operation, as previously described.

FIG. 4 is a block diagram illustrating an example computing device 400, in accordance with one or more aspects of the present disclosure. Computing device 400 may comprise one example of computing device 100 (FIG. 1), computing device 200 (FIG. 2), and/or computing device 300 (FIG. 3). FIG. 4 illustrates only one particular example of computing device 400, and many other examples of computing device 400 may be used in other instances. In various cases, computing device 400 may include a subset of the components shown in FIG. 4 or may include additional components not shown in FIG. 4.

In the example of FIG. 4, computing device 400 includes presence-sensitive display device 402, one or more processors 440, one or more input components 442, one or more communication units 450, a fingerprint sensor 404, one or more output components 454, one or more other sensors 452, a haptic actuator, a power source 456, and one or more storage devices 458. Communication channels 447 may interconnect each of the components 440, 442, 402, 450, 404, 452, 454, 406, 456, and/or 458 for inter-component communications (physically, communicatively, and/or operatively). In some examples, communication channels 447 may include a system bus, a network connection, an inter-process communication data structure, or any other method for communicating data between hardware and/or software.

One or more input components 442 of computing device 400 may receive input, such as input from a user. Examples of input are touch/tactile, presence-sensitive, and audio input. Examples of input components 442 include a presence-sensitive screen, touch-sensitive screen, touchscreen, mouse, keyboard, trackpad, voice responsive system, video camera, microphone or any other type of device for detecting input from a human or machine.

One or more output components 454 of computing device 400 may generate output. Examples of output are haptic, audio, and visual output. Examples of output components 454 include a presence-sensitive screen, a touch-sensitive screen, a touchscreen, a sound card, a video graphics adapter card, a speaker, a liquid crystal display (LCD), an organic light-emitting diode (OLED) display, a micro light-emitting diode (microLED) display, an active matrix organic light-emitting diode (AMOLED) display, a haptic device, or any other type of device for generating output to a human or machine.

One or more communication units 450 of computing device 400 may communicate with external devices via one or more networks by transmitting and/or receiving network signals on the one or more networks (e.g., one or more wired and/or wireless networks). For example, computing device 400 may use communication units 450 to transmit and/or receive radio signals on a radio network such as a cellular radio network. Likewise, communication units 450 may transmit and/or receive satellite signals on a satellite network such as a global positioning system (GPS) network. Examples of communication units 450 include a network interface card (e.g. such as an Ethernet card), an optical transceiver, a radio frequency transceiver, a GPS receiver, or any other type of device that can send and/or receive information. Other examples of communication units 450 may include short wave radios, cellular data radios, wireless Ethernet network radios, as well as universal serial bus (USB) controllers.

Presence-sensitive display device 402 of computing device 400 includes display component 443 and presence-sensitive input component 445. In some examples, presence-sensitive display device 402 may provide output to a user using haptic, audio, or visual stimuli as described above with reference to output components 454. For example, display component 443 may provide display or video output as described with reference to output components 454. Presence-sensitive display device 402 may also provide input capabilities such as that described above with reference to input components 442. For example, presence-sensitive input component 445 may provide input capabilities as described with reference to input components 442.

Display component 443 may be a screen at which information is displayed by presence-sensitive display device 402, and presence-sensitive input component 445 may detect an object at and/or near display component 443. As one example range, presence-sensitive input component 445 may detect an object, such as a finger or stylus that is within two inches or less of display component 443. Presence-sensitive input component 445 may determine a location (e.g., an (x,y) coordinate) of display component 443 at which the object was detected. In another example range, presence-sensitive input component 445 may detect an object six inches or less from display component 443 and other ranges are also possible. Presence-sensitive input component 445 may determine the location of display component 443 selected by a user's finger using capacitive, inductive, radar-based, and/or optical recognition techniques. In some examples, presence-sensitive input component 445 also provides output to a user using touch, presence-sensitive, audio, or video stimuli as described with respect to display component 443. Display component 443 may be any type of output device that provides visual output, such as described with respect to output components 454.

While illustrated as an internal component of computing device 400, presence-sensitive display device 402 may also represent an external component that shares a data path with computing device 400 for transmitting and/or receiving input and output. For instance, in one example, presence-sensitive display device 402 represents a built-in component of computing device 400 located within and physically connected to the external packaging of computing device 400 (e.g., a screen on a mobile phone). In another example, presence-sensitive display device 402 represents an external component of computing device 400 located outside and physically separated from the packaging of computing device 400 (e.g., a monitor and/or a projector that shares a wired and/or wireless data path with a tablet computer).

Presence-sensitive display device 402 of computing device 400 may detect two-dimensional and/or three-dimensional gestures as input from a user of computing device 400. For instance, a sensor of presence-sensitive display device 402 (e.g., sensor of presence-sensitive input component 445) may detect a user's movement (e.g., moving a hand, an arm, a pen, a stylus) within a threshold distance of the sensor of presence-sensitive display device 402. Presence-sensitive display device 402 may determine a two- or three-dimensional vector representation of the movement and correlate the vector representation to a gesture input (e.g., a hand-wave, a pinch, a clap, a pen stroke) that has multiple dimensions. In other words, presence-sensitive display device 402 can detect a multi-dimensional gesture without requiring the user to gesture at or near a screen or surface (e.g., display component 443) at which presence-sensitive display device 402 outputs information for display. Instead, presence-sensitive display device 402 can detect a multi-dimensional gesture performed at or near a sensor which may or may not be located near the screen or surface at which presence-sensitive display device 402 outputs information for display.

Fingerprint sensor 404 may, in various examples, comprise one of an optical scanner, a capacitive scanner, or an ultrasonic scanner. Fingerprint sensor 404 may be one example of fingerprint sensor 104 (FIG. 1), fingerprint sensor 204 (FIG. 2), and/or fingerprint sensor 336 (FIG. 3).

Haptic actuator 406 may be configured to output haptic signals from computing device 400 (e.g., haptic signals that cause one or more vibrations of computing device 400). In some examples, haptic actuator 406 may comprise one of an eccentric rotating mass motor, a linear resonant actuator, a piezoelectric actuator, or a forced impact actuator. Haptic actuator 406 may be one example of haptic actuator 106 (FIG. 1) and/or haptic actuator 206 (FIG. 2).

One or more storage devices 458 within computing device 200 may store information for processing during operation of computing device 400 (e.g., during execution of one or more of UI module 408, applications 410, operating system 460, fingerprint sensing module 412, haptic feedback module 414, fingerprint recognition module 416, and/or visual feedback module 418). In some examples, storage devices 458 include temporary memory, meaning that a primary purpose of storage devices 458 is not long-term storage. Storage devices 458 on computing device 400 may be configured for short-term storage of information as volatile memory and therefore not retain stored contents if powered off. Examples of volatile memories include random access memories (RAM), dynamic random-access memories (DRAM), static random-access memories (SRAM), and other forms of volatile memories known in the art.

Storage devices 458, in some examples, include one or more computer-readable storage media. Storage devices 458 may be configured to store larger amounts of information than volatile memory. Storage devices 458 may further be configured for long-term storage of information as non-volatile memory space and retain information after power on/off cycles. Examples of non-volatile memories include magnetic hard discs, optical discs, floppy discs, flash memories, or forms of electrically programmable memories (EPROM) or electrically erasable and programmable (EEPROM) memories. Storage devices 458 may store program instructions and/or data associated with one or more UI module 408, applications 410, operating system 460, fingerprint sensing module 412, haptic feedback module 414, fingerprint recognition module 416, visual feedback module 418, and/or fingerprint data 462. In some examples, UI module 408, applications 410, operating system 460, fingerprint sensing module 412, haptic feedback module 414, fingerprint recognition module 416, and/or visual feedback module 418 are stored locally on computing device 400. In other cases, UI module 408, applications 410, operating system 460, fingerprint sensing module 412, haptic feedback module 414, fingerprint recognition module 416, and/or visual feedback module 418 may be stored remotely in the cloud (e.g., at one or more external servers). UI module 408, applications 410, fingerprint sensing module 412, haptic feedback module 414, fingerprint recognition module 416, and/or visual feedback module 418 may comprise examples of similarly numbered components or modules shown in FIGS. 1-3.

In certain cases, fingerprint sensing module 412 and/or fingerprint recognition module 416 may store data in, or retrieve data from, optional fingerprint data 462. Fingerprint data 462 may store fingerprint data associated with one or more fingerprints of one or more users, such as previously enrolled or authenticated users of computing device 400. Fingerprint data 462 may comprise any type of data representing the fingerprint of the finger of the user. For example, fingerprint data 462 may be provided by fingerprint sensor 404 (e.g., an optical scanner, a capacitive scanner, or an ultrasonic scanner), and this data may indicate a two- or three-dimensional representation of the fingerprint.

In various examples, fingerprint data 462 is stored only locally on computing device 400, and is not stored in the cloud. The storage of user data, such as fingerprint data 462 or identification information associated with a user, may only occur, in various examples, in response to computing device 400 (e.g., via UI module 408) receiving an affirmative consent from the user. UI module 408 may, for example, provide an explicit request to the user regarding the storage and subsequent use of such data, and computing device 400 may proceed to store the data locally only upon receiving an affirmative response and consent from the user.

As shown in FIG. 4, computing device 400 may include a power source 456. In some examples, power source 456 may be a battery. Power source 456 may provide power to one or more components of computing device 400. Non-limiting examples of power source 456 may include, but are not necessarily limited to, batteries having zinc-carbon, lead-acid, nickel cadmium (NiCd), nickel metal hydride (NiMH), lithium ion (Li-ion), and/or lithium ion polymer (Li-ion polymer) chemistries. In some examples, power source 456 may have a limited capacity (e.g., 1000-3000 mAh).

Computing device 400 also includes one or more other sensors 452. In some examples, one or more of sensors 452 may be examples of one or more of input components 442. Sensors 452 may include one or more inertial measurement units. For example, sensors 452 may include one or more gyroscopes, such as one or more high-frequency gyroscopes (e.g., a 200 Hz gyroscope). As described herein, sensors 452 of computing device 400 may be configured to determine a real-time orientation or rotation of computing device 400 in three-dimensional space. In some examples, sensors 452 may also include one or more accelerometers.

One or more processors 440 may implement functionality and/or execute instructions within computing device 400. For example, processors 440 on computing device 400 may receive and execute instructions stored by storage devices 458 that execute the functionality of UI module 408, applications 410, operating system 460, fingerprint sensing module 412, haptic feedback module 414, fingerprint recognition module 416, and/or visual feedback module 418. These instructions executed by processors 440 may cause computing device 400 to store information within storage devices 458 during program execution. Processors 440 may execute instructions of operating system 460 and/or applications 410 to perform one or more operations. That is, operating system 460 and/or applications 410 may be operable by processors 440 to perform various functions described herein.

In some alternate examples, computing device 400 may only comprise or otherwise include processors 440. In these examples, one or more of input components 442, presence-sensitive display device 402, communication units 450, fingerprint sensor 404, one or more of other sensors 452, output components 454, haptic actuator 406, power source 456, and storage devices 458 may be external to, yet communicatively coupled with (e.g., via communication channels 447), computing device 400.

FIG. 5 is a graph diagram illustrating an output of haptic signals over time with varying intensity, in accordance with one or more aspects of the present disclosure. In particular, FIG. 5 illustrates the output of a sequence of haptic signals of increasing intensity over a defined period of time, as well as the output of a discrete haptic signal. In FIG. 5, time is shown on the horizontal axis and vibration intensity is shown on the vertical axis, such that the graph illustrates vibration intensity plotted over time. Curve 570 illustrated in FIG. 5 represents the output of the sequence of haptic signals of increasing intensity over a defined period of time (e.g., a period of time from zero to T1), and point 572 illustrated in FIG. 5 represents the output of the discrete haptic signal. In some examples, time may be measured in units of milliseconds.

For instance, curve 570 may represent the output of the sequence of haptic signals 120A, 120B, 120C shown in FIG. 1, where each haptic signal in the sequence has an intensity that is greater than a respective intensity of any haptic signal previously output in the sequence. As shown in the particular example of FIG. 5, the shape of curve 570 indicates that the haptic signals in the sequence are output not only with increasing but also accelerating intensity up to time T1. At time T1, the last haptic signal in the sequence (e.g., haptic signal 120C) is output with a vibration intensity value of V1. In some cases, vibration intensity may be measured in units of amplitude, magnitude, or frequency with respect to the associated vibrational waves. In some cases, vibration intensity may be measured in units of acceleration with respect to the associated vibrational waves.

Point 572 may represent the output of discrete haptic signal 121 shown in FIG. 1, where discrete haptic signal 121 has an intensity V2 at time T2 that is greater than the respective intensity of any haptic signal included in the sequence represented by curve 570. Intensity value 576 represents the difference between the intensity V2 of the discrete haptic signal output at time T2, as represented by point 572, and the intensity V1 at time T1 of the last haptic signal included in the sequence represented by curve 570.

As previously described in reference to FIG. 1, in certain examples, haptic feedback module 114 may output the sequence of haptic signals 120A, 120B, 120C as short haptic pulses, separated by pauses in time during which no haptic pulses are output. For instance, each of haptic signals 120A, 120B, 120C may comprise a haptic pulse of a short duration (e.g., 4 ms), and haptic feedback module 114 may output each of the sequence of haptic signals 120A, 120B, 120C as a respective haptic pulse of this short duration.

In some cases, these pause periods may each have a constant duration in between the haptic signals. In other cases, the pause periods may have variable duration. For example, these pause periods that occur between respective haptic signals 120A, 120B, 120C in the sequence may decrease in duration over the defined period of time during which haptic signals 120A, 120B, 120C are output, such that these haptic signals may comprise haptic pulses that are output with varying intensity and also increasing speed (e.g., due to shorter pause periods over the defined period of time). For example, haptic feedback module 114 may refrain from outputting any haptic signals during a first pause period that occurs between the output of haptic signals 120A and 120B. Haptic feedback module 114 may also refrain from outputting any haptic signals during a second pause period that occurs between the output of haptic signals 120B and 120C. In some cases, the second pause period may be equal to the first pause period. However, in other cases, the second pause period may be shorter in duration than the first pause period. As a result, in these cases, haptic feedback module 114 may output haptic signals 120A, 120B, 120C with varying intensity and increasing speed.

In addition, in some cases and as illustrated in FIG. 5, haptic feedback module 114 may also include another, separate pause period 574 between the outputting of the sequence of haptic signals and the discrete haptic signal. For instance, after outputting the sequence of haptic signals with increasing intensity, as represented by curve 570, haptic feedback module 114 may refrain, for another defined period of time 574 (e.g., pause period 574), from outputting any haptic signals prior to outputting the discrete haptic signal represented by point 572. In the example of FIG. 5, this pause period 574 is T2-T1. In many cases, the inclusion of this pause period may result in an enhanced physiological response associated with discrete haptic signal 121 as detected by finger 122, indicating that the fingerprint sensing operation has successfully completed, and that the user may lift finger 122 from fingerprint sensor 104.

In some cases, finger 122 is capable of sensing discrete haptic signal 121 with a stronger or more discernable physiological response when haptic feedback module 114 includes this pause period 574 after outputting the sequence of haptic signals 120A, 120B, 120C with increasing intensity, and prior to outputting discrete haptic signal 121. In various cases, the inclusion of this pause period 574 may at least in part allow the nerves in the user's finger 122 to recover from the effects of the initial haptic signals 120A, 120B, 120C, which in turn allows the user to more easily discern the subsequent discrete haptic signal 121 with a stronger or more discernable physiological response, which indicates that the fingerprint sensing operation has successfully completed and that the user may now remove finger 122 from fingerprint sensor 104. In other cases (not shown in FIG. 5), haptic feedback module 114 may not include pause period 574, and may output the discrete haptic signal represented by point 572 after outputting the sequence of haptic signals represented by curve 570.

In various examples, haptic feedback module 114 may output haptic signals having intensities that are based on selected floating-point values between zero and one. In these examples, a floating-point value of zero corresponds to an intensity value of zero, and a floating-point value of one corresponds to a maximum intensity value. In non-limiting cases, haptic feedback module 114 may select floating-point values between 0.0 to 0.3 for the ramp intensity values corresponding to the sequence of haptic signals 120A, 120B, 120C represented by curve 570. In these cases, the floating-point values in the range 0.0 to 0.3 correspond to intensity values 0 to V1 shown on FIG. 5, representing the vibration strength or intensity of the sequence of haptic signals 120A, 120B, 120C, which may be detected by finger 122 as a continuously increasing haptic texture. In relative terms, and in certain cases, a 'texture' of haptic signals 120A, 120B, 120C can be relatively low (e.g., less than 10% of total output or of the maximum intensity value) and still be easily felt by the user. The value of V1 may depend on the specific actuator that is used (e.g., the type of haptic actuator 106, 206, 406). The floating-point values in the range 0.0 to 0.3, as described above, correspond to intensity values 0 to V1 shown on FIG. 5 (e.g., ramping the output from 0-30% to arrive at V1 in curve 570). In certain non-limiting examples, T1 may have an example value of 800 ms.

In these cases, the pause period 574 (e.g. T2-T1) may be equal to 100 ms, such that haptic feedback module 114 pauses for this 100 ms period of time before outputting discrete haptic signal 121 at time T2, represented at point 572 in FIG. 5. At time T2, haptic feedback module 114 may output discrete haptic signal 121 with an intensity V2 that corresponds to a floating-point value in the range of 0.7 to 1.0 (e.g., a short, stronger pulse at 70% - 100% of the maximum intensity value) to create a 'snap effect' of a strong haptic pulse detected by finger 122. As a result, the value of V2 may be approximately equal or greater than two-to-three times the value of V1 in these non-limiting cases, resulting in a strong, discrete haptic signal 121 indicating that the fingerprint sensing operation has successfully completed, and that the user may raise finger 122 from fingerprint sensor 104.

FIGS. 6A-6D are screen diagrams of an example computing device 600 that is configured to output haptic signals of increasing intensity, as well as corresponding visual images, during a fingerprint sensing operation, in accordance with one or more aspects of the present disclosure. As previously described, a computing device may be configured to output a sequence of haptic signals of increasing intensity, over a defined period, while also outputting a sequence of visual images (e.g., images of increasing intensity), indicating that a user is to maintain the user's finger at the fingerprint sensor while the fingerprint sensing operation is performed. Upon completion of the fingerprint sensing operation, the computing device may output both a discrete haptic signal as well as a discrete visual image to indicate that the fingerprint sensing operation has successfully completed, and that the user may raise the finger from the fingerprint sensor. FIGS. 6A-6D illustrate this concept. For purposes of illustration only, FIGS. 6A-6D are described below in reference to the components illustrated in FIG. 2, where computing device 600 is one example of computing device 200.

For example, haptic feedback module 214 (FIG. 2) may, over a period of time, output a sequence of haptic signals 620A, 620B, 620C of increasing intensity, as illustrated in FIGS. 6A-6C. In addition, visual feedback module 218 may also output, over this period of time, a sequence of visual images 626A-626C (collectively "626"), 627A-627C (collectively "627"), 628A-628C (collectively "628"), 629A-629C (collectively "629") of varying (e.g., increasing) intensity. The output of these haptic signals and visual images in FIGS. 6A-6C indicate that the fingerprint sensing operation is not yet complete, and that the user should maintain the user's finger 622 at the fingerprint sensor of computing device 600.

FIG. 6A illustrates an example of computing device 600 at a first point in time, which marks the beginning of a defined period of time during which a fingerprint sensing module, such as fingerprint sensing module 212, performs the fingerprint sensing operation. Fingerprint sensing module 212 and/or UI module 208 may output graphical information 624 for display at display device 602. Graphical information 624 (e.g., a graphical fingerprint icon having a shape of a fingerprint) may be displayed at a region or area of display device 602 that is associated with fingerprint sensor 204. Graphical information 624 may indicate where the user is to position finger 622 during a fingerprint sensing operation.

At this first point in time, haptic feedback module 214 may output a first haptic signal 620A in the sequence of haptic signals, which may be detected by finger 622. In addition, visual feedback module 218 may output a first image as part of a visual sequence, where the first image forms incomplete image portions 626A, 627A, 628A, 629A of a visual ring displayed around the region of display device 602 at which graphical information 624 is displayed, and which is also associated with fingerprint sensor 204. Each image portion 626A, 627A, 628A, 629A comprises a respective incomplete portion of a visual ring. The output of haptic signal 620A and incomplete image portions 626A, 627A, 628A, 629A indicate that fingerprint sensing operation is not yet complete, and that the user is to maintain finger 622 at fingerprint sensor 204 (e.g., at or near graphical information 624, which is displayed at a region associated with fingerprint sensor 204).

At a second and subsequent point in time, illustrated in FIG. 6B, which occurs while fingerprint sensing module 212 continues to perform the fingerprint sensing operation, haptic feedback module 214 may output a second haptic signal 620B in the sequence of haptic signals, which may be detected by finger 622. Haptic signal 620B may have a greater intensity than haptic signal 620A. In addition, visual feedback module 218 may output a second image as part of the visual sequence, where the second image forms incomplete image portions 626B, 627B, 628B, 629B of a visual ring displayed around the region of display device 602 at which graphical information 624 is displayed. Each image portion 626B, 627B, 628B, 629B comprises a respective incomplete portion of the visual ring. However, image portions 626B, 627B, 628B, 629B are larger in size and have an increased visual intensity compared to image portions 626A, 627A, 628A, 629A shown in FIG. 6A, and they collectively form a more complete version of the visual ring than the image portions shown in FIG. 6A. In some examples, image portions 626B, 627B, 628B, 629B may be displayed with one or more additional features (e.g., color, brightness) that provide a different (e.g., greater) visual intensity in comparison to image portions 626A, 627A, 628A, 629A. The output of haptic signal 620B and incomplete image portions 626B, 627B, 628B, 629B indicate that fingerprint sensing operation is not yet complete, and that the user is to maintain finger 622 at fingerprint sensor 204.

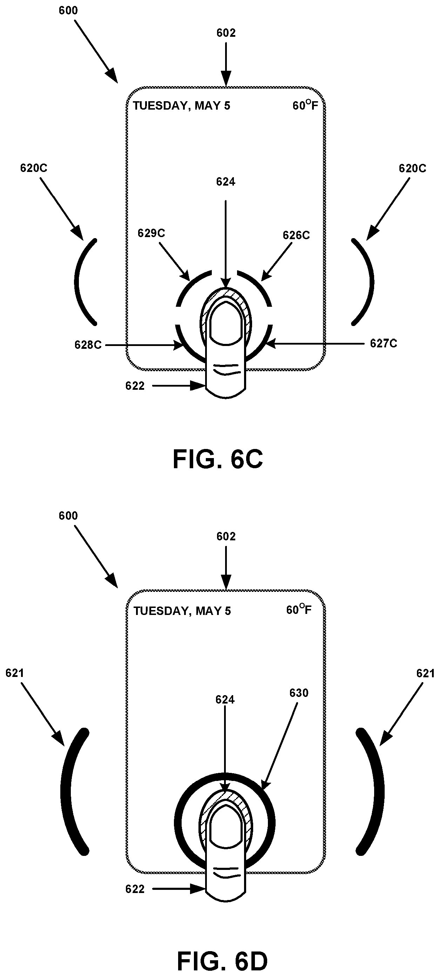

At a third and subsequent point in time, illustrated in FIG. 6C, which also occurs while fingerprint sensing module 212 continues to perform the fingerprint sensing operation, haptic feedback module 214 may output a third haptic signal 620C in the sequence of haptic signals, which may be detected by finger 622. Haptic signal 620C may have a greater intensity than haptic signal 620B. In addition, visual feedback module 218 may output a third image as part of the visual sequence, where the third image forms incomplete image portions 626C, 627C, 628C, 629C of the visual ring. Each image portion 626C, 627C, 628C, 629C comprises a respective incomplete portion of the visual ring. However, image portions 626C, 627C, 628C, 629C are larger in size and have an increased visual intensity compared to image portions 626B, 627B, 628B, 629B shown in FIG. 6B, and they collectively form an even more complete version of the visual ring than the image portions shown in FIG. 6B. In some examples, image portions 626C, 627C, 628C, 629C may be displayed with one or more additional features (e.g., color, brightness) that provide a different (e.g., greater) visual intensity in comparison to image portions 626B, 627B, 628B, 629B. The output of haptic signal 620C and incomplete image portions 626C, 627C, 628C, 629C indicate that fingerprint sensing operation is not yet complete, and that the user is to maintain finger 622 at fingerprint sensor 204.

At a fourth point in time, illustrated in FIG. 6D, and after the defined period of time for outputting the sequence of haptic signals and the visual sequence of images has passed, fingerprint sensing module 212 may complete the fingerprint sensing operation. Upon completion of the fingerprint sensing operation, fingerprint sensing module 212 may obtain, from fingerprint sensor 204, fingerprint data associated with a fingerprint of finger 622 if finger 622 is still positioned at fingerprint sensor 204. Haptic feedback module 214 may also output discrete haptic signal 621, which has a greater intensity than any of haptic signals 620A, 620B, 620C shown in FIGS. 6A-6C. While haptic feedback module 214 outputs this discrete haptic signal 621, visual feedback module 218 may also output a discrete image 630 comprising an entirety of the visual ring, indicating a successful completion of the fingerprint sensing operation. Discrete image 630 is larger in size and has an increased visual intensity compared to any of image portions 626, 627, 628, 629 shown in FIGS. 6A-6C. In some examples, discrete image 630 may be displayed with one or more additional features (e.g., color, brightness) that provide a different (e.g., greater) visual intensity in comparison to image portions 626C, 627C, 628C, 629C. The output of discrete haptic signal 621 and discrete visual image 630 indicate that fingerprint sensing operation has successfully completed, and that the user may raise or remove finger 622 from fingerprint sensor 204.

In various examples, as the output of the sequence of haptic signals and the sequence of visual images illustrated in FIGS. 6A-6C nears completion, the output of the sequence of haptic signals and visual images may speed up or accelerate in intensity, thereby creating a 'snap' effect that occurs when outputting discrete haptic signal 621 and discrete image 630, as shown in FIG. 6D, to indicate a successful completion of the fingerprint sensing operation. In these examples, the haptic and visual effects may not be flat and static, but instead may build (e.g., continuously increase or accelerate) with effect or intensity (e.g., both visually and haptically) so that the user's senses are engaged with the 'snap' open effect.

FIGS. 7A-7D are screen diagrams of another example computing device 700 that is configured to output haptic signals of increasing intensity, as well as corresponding visual images of varying (e.g., increasing) intensity, during a fingerprint sensing operation, in accordance with one or more aspects of the present disclosure. For purposes of illustration only, FIGS. 7A-7D are described below in reference to the components illustrated in FIG. 2, where computing device 700 is one example of computing device 200.

The examples of FIGS. 7A-7D are similar to those illustrated in FIGS. 6A-6D. However, in FIGS. 7A-7D, rather than outputting portions of a visual ring such as shown in FIGS. 6A-6D, visual feedback module 218 outputs a visual sequence of images over the defined period of time at least by outputting the visual sequence of images to form concentric rings or polygons that are displayed around the region of display device 202 that is associated with fingerprint sensor 204 (e.g., the region corresponding to graphical information 224). In this example, while haptic feedback module 214 outputs discrete haptic signal 221, visual feedback module 218 refrains from outputting any images around this region of display device 202, such as indicated in FIG. 7D.

In FIGS. 7A-7D, fingerprint sensing module 212 and/or UI module 208 may output graphical information 724 for display at display device 702. Graphical information 724 (e.g., a graphical fingerprint icon having a shape of a fingerprint) may be displayed at a region or area of display device 702 that is associated with fingerprint sensor 204. Graphical information 724 may indicate where the user is to position finger 722 during a fingerprint sensing operation.

Haptic feedback module 214 may, over a period of time, output a sequence of haptic signals 720A, 720B, 720C of increasing intensity, as illustrated in FIGS. 7A-7C. In addition, visual feedback module 218 may also output, over this period of time, a sequence of visual images 780, 782, 784. The output of these haptic signals and visual images in FIGS. 7A-7C indicate that the fingerprint sensing operation is not yet complete, and that the user should maintain the user's finger 722 at the fingerprint sensor of computing device 700.

As shown in FIG. 7A, at a first point in time, haptic feedback module 214 may output a first haptic signal 720A in the sequence of haptic signals, which may be detected by finger 722. In addition, visual feedback module 218 may output a first image as part of a visual sequence, where the first image forms a first visual ring 780 displayed around the region of display device 702 at which graphical information 724 is displayed, and which is also associated with fingerprint sensor 204.

At a second and subsequent point in time, illustrated in FIG. 7B, which occurs while fingerprint sensing module 212 continues to perform the fingerprint sensing operation, haptic feedback module 214 may output a second haptic signal 720B in the sequence of haptic signals, which may be detected by finger 722. Haptic signal 720B may have a greater intensity than haptic signal 720A. In addition, visual feedback module 218 may output a second image as part of the visual sequence, where the second image forms a second visual ring 782. Visual ring 782 is larger in size and has an increased visual intensity compared to visual ring 780. Visual ring 782 and visual ring 780 may form concentric rings. In some examples, visual ring 782 may be displayed with one or more additional features (e.g., color, brightness) that provide a different (e.g., greater) visual intensity in comparison to visual ring 780. The output of haptic signal 720B and visual rings 780, 782 indicate that fingerprint sensing operation is not yet complete, and that the user is to maintain finger 722 at fingerprint sensor 704.

At a third and subsequent point in time, illustrated in FIG. 7C, which also occurs while fingerprint sensing module 212 continues to perform the fingerprint sensing operation, haptic feedback module 214 may output a third haptic signal 720C in the sequence of haptic signals, which may be detected by finger 722. Haptic signal 720C may have a greater intensity than haptic signal 720B. In addition, visual feedback module 218 may output a third image as part of the visual sequence, where the third image forms visual ring 784. Visual ring 784 is larger in size and has an increased visual intensity compared to visual rings 780 and 782. Visual ring 784, visual ring 782, and visual ring 780 may form concentric rings. In some examples, visual ring 784 may be displayed with one or more additional features (e.g., color, brightness) that provide a greater visual intensity in comparison to visual rings 780 and 782. The output of haptic signal 720C and visual rings 780, 782, 784 indicate that fingerprint sensing operation is not yet complete, and that the user is to maintain finger 722 at fingerprint sensor 704.

At a fourth point in time, illustrated in FIG. 7D, and after the defined period of time for outputting the sequence of haptic signals and the visual sequence of images has passed, fingerprint sensing module 212 may complete the fingerprint sensing operation. Upon completion of the fingerprint sensing operation, fingerprint sensing module 212 may obtain, from fingerprint sensor 204, fingerprint data associated with a fingerprint of finger 722 if finger 722 is still positioned at fingerprint sensor 204. Haptic feedback module 214 may also output discrete haptic signal 621, which has a greater intensity than any of haptic signals 720A, 720B, 720C shown in FIGS. 7A-7C. While haptic feedback module 214 outputs this discrete haptic signal 721, visual feedback module 218 may refrain from outputting any images around the region of display device 702 at which graphical information 724 is displayed, which is associated with fingerprint sensor 204. The output of discrete haptic signal 721 without any corresponding visual indicates that fingerprint sensing operation has successfully completed, and that the user may raise or remove finger 722 from fingerprint sensor 204.

In various examples, as the output of the sequence of haptic signals and the sequence of visual images illustrated in FIGS. 7A-7C nears completion, the output of the sequence of haptic signals and visual images may speed up or accelerate in intensity, thereby creating a 'snap' effect that occurs when outputting discrete haptic signal 721, as shown in FIG. 7D, to indicate a successful completion of the fingerprint sensing operation. In these examples, the haptic and visual effects may not be flat and static, but instead may build (e.g., continuously increase or accelerate) with effect or intensity (e.g., both visually and haptically) so that the user's senses are engaged with the 'snap' open effect.

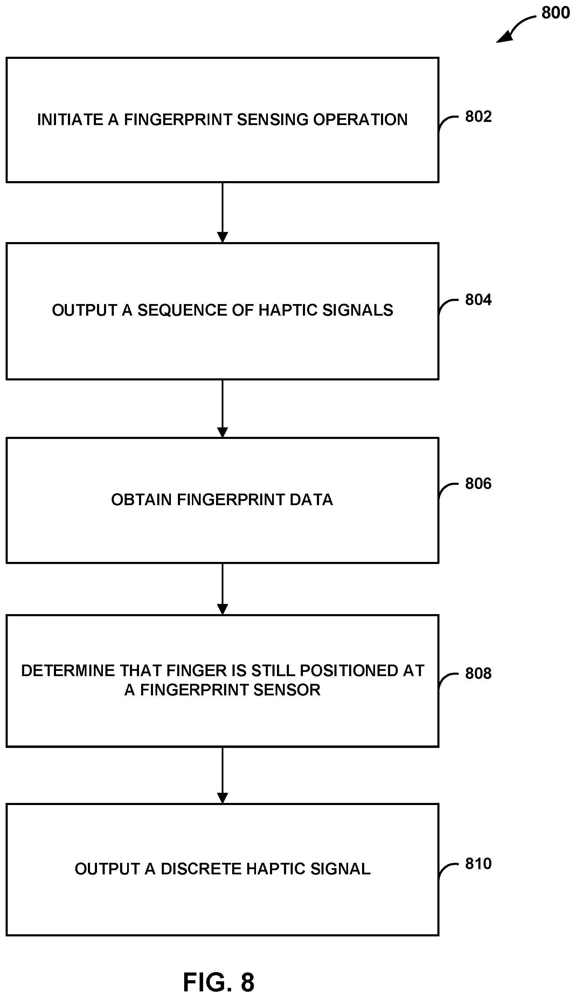

FIG. 8 is a flow diagram illustrating example operations of a process 800 that is performed by a computing device, such as any of the computing devices illustrated in FIGS. 1-4 and 6-7, in accordance with one or more aspects of the present disclosure. For purposes of illustration only, the operations of FIG. 8 are described with reference to computing device 400 shown in FIG. 4, along with haptic signals 120A-120C and 121 shown in FIG. 1.

As shown in FIG. 8, process 800 includes initiating (802), by computing device 400 (e.g., using fingerprint sensing module 412), a fingerprint sensing operation that is associated with fingerprint sensor 404. Computing device 400 may initiate this fingerprint sensing operation responsive to determining (e.g., using fingerprint sensing module 412) that the finger of a user is positioned at fingerprint sensor 404 (e.g., based on input from one or more of fingerprint sensor 404 and/or presence-sensitive display device 402).

Process 800 further includes outputting (804), by computing device 400 (e.g., using haptic feedback module 414 that activates haptic actuator 406), and over a defined period of time, a sequence of haptic signals (e.g., haptic signals 120A-120C) with varying (e.g., increasing) intensity. Each haptic signal in the sequence has an intensity that is different (e.g., greater) than a respective intensity of any haptic signal that was previously output in the sequence.

Process 800 further includes obtaining (806), by computing device 400 (e.g., using fingerprint sensing module 412) and from fingerprint sensor 404, fingerprint data that is associated with a fingerprint of the finger of the user. Process 800 includes determining (808), by computing device 400 (e.g., using fingerprint sensing module 412), whether the finger of the user is still positioned at fingerprint sensor 404 upon completion of the fingerprint sensing operation. For instance, fingerprint sensing module 412 may determine whether the finger of the user is still positioned at fingerprint sensor 404 based on input from fingerprint sensor 404 and/or presence-sensitive display device 402. Responsive to determining that the finger of the user is still positioned at fingerprint sensor 404 upon completion of the fingerprint sensing operation, process 800 also includes outputting (810), by computing device 400 (e.g., using haptic feedback module 414 that activates haptic actuator 406), a discrete haptic signal (e.g., discrete haptic signal 121) to indicate a successful completion of the fingerprint sensing operation.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other storage medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structures or any other structure suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of intraoperative hardware units, including one or more processors as described above, in conjunction with suitable software and/or firmware.

It is to be recognized that, depending on the embodiment, certain acts or events of any of the methods described herein can be performed in a different sequence, may be added, merged, or left out altogether (e.g., not all described acts or events are necessary for the practice of the method). Moreover, in certain embodiments, acts or events may be performed concurrently, e.g., through multi-threaded processing, interrupt processing, or multiple processors, rather than sequentially.

In some examples, a computer-readable storage medium comprises a non-transitory medium. The term "non-transitory" indicates that the storage medium is not embodied in a carrier wave or a propagated signal. In certain examples, a non-transitory storage medium may store data that can, over time, change (e.g., in RAM or cache).

Various examples have been described. These and other examples are within the scope of the following claims.

## Claims

1. A method (800) comprising:
responsive to determining that a finger of a user is positioned at a fingerprint sensor (104; 204; 404), initiating (802), by a computing device (100; 200; 400), a fingerprint sensing operation that is associated with the fingerprint sensor;
outputting (804), by the computing device and over a first defined period of time, a sequence of haptic signals with varying intensity, wherein each haptic signal in the sequence has an intensity that is different than a respective intensity of any haptic signal that was previously output in the sequence;
obtaining (806), by the computing device and from the fingerprint sensor, fingerprint data that is associated with a fingerprint of the finger of the user;
determining (808), by the computing device, whether the finger of the user is still positioned at the fingerprint sensor upon completion of the fingerprint sensing operation; and
responsive to determining that the finger of the user is still positioned at the fingerprint sensor upon completion of the fingerprint sensing operation, outputting (810), by the computing device, a discrete haptic signal to indicate a successful completion of the fingerprint sensing operation,
wherein the method further comprises:
after outputting the sequence of haptic signals with varying intensity, refraining, by the computing device and for a second defined period of time, from outputting any haptic signals prior to outputting the discrete haptic signal.

2. The method of claim 1,
wherein outputting the sequence of haptic signals with varying intensity comprises outputting, by the computing device and over the first defined period of time, the sequence of haptic signals with increasing intensity, the intensity of each haptic signal in the sequence being greater than the respective intensity of any haptic signal that was previously output in the sequence, and
wherein the discrete haptic signal has an intensity that is greater than the respective intensity of any haptic signal included in the sequence of haptic signals.

3. The method of any of claims 1-2, further comprising:
determining, by the computing device, a fingerprint sensing time period for completion of the fingerprint sensing operation, and determining, by the computing device based on the fingerprint sensing time period, the first defined period of time over which to output the sequence of haptic signals with varying intensity.

4. The method of any of claims 1-2, further comprising:
responsive to determining that the finger of the user is no longer positioned at the fingerprint sensor prior to or upon completion of the fingerprint sensing operation, outputting, by the computing device, multiple discrete haptic signals of varying intensity to indicate an unsuccessful completion of the fingerprint sensing operation.

5. The method of any of claims 1-4, further comprising:
while outputting the sequence of haptic signals with varying intensity, outputting, by the computing device and over the first defined period of time, and for display at a presence-sensitive display device, a visual sequence of images.

6. The method of claim 5,
wherein images in the visual sequence of images are output with varying intensity, each of the images in the visual sequence of images having an intensity that is different than a respective intensity of any image that was previously output in the visual sequence of images.

7. The method of claim 6,
wherein outputting the sequence of haptic signals comprises outputting, by the computing device and over the first defined period of time, the sequence of haptic signals with increasing intensity, the intensity of each haptic signal in the sequence being greater than the respective intensity of any haptic signal that was previously output in the sequence, and
wherein outputting the visual sequence of images comprises outputting, by the computing device and over the first defined period of time, for display at the presence-sensitive display device, the visual sequence of images with increasing intensity, the intensity of each of the images in the visual sequence of images being greater than the respective intensity of any image that was previously output in the visual sequence of images;
and optionally wherein:
outputting the visual sequence of images with increasing intensity comprises outputting, by the computing device and over the first defined period of time, for display at the presence-sensitive display device, a visual animation that speeds up as the visual animation nears completion in order to create a visual effect to indicate the successful completion of the fingerprint sensing operation, and
the method further comprises after outputting the visual animation, performing, by the computing device, an unlock operation associated with unlocking the computing device.

8. The method of claim 5, wherein outputting the visual sequence of images comprises outputting, by the computing device and over the first defined period of time, for display at the presence-sensitive display device, the visual sequence of images to form incomplete image portions of a visual ring displayed around a region of the presence-sensitive display device that is associated with the fingerprint sensor, and optionally wherein the method further comprises, while outputting the discrete haptic signal, outputting, by the computing device and for display at the presence-sensitive display device, a discrete image comprising an entirety of the visual ring.

9. The method of claim 5, wherein outputting the visual sequence of images comprises outputting, by the computing device and over the first defined period of time, for display at the presence-sensitive display device, the visual sequence of images to form concentric rings that are displayed around a region of the presence-sensitive display device that is associated with the fingerprint sensor, and optionally wherein the method further comprises:
while outputting the discrete haptic signal, refraining, by the computing device, from outputting any images around the region of the presence-sensitive display device that is associated with the fingerprint sensor.

10. The method of any of claims 1-9, wherein:
the fingerprint sensor comprises one of an optical scanner, a capacitive scanner, or an ultrasonic scanner and the fingerprint data comprises data representing the fingerprint of the finger of the user, the fingerprint data being provided by the one of the optical scanner, the capacitive scanner, or the ultrasonic scanner; and/or
the computing device has a front portion, a back portion opposite from the front portion, and one or more side portions, the computing device includes a presence-sensitive display device that is provided on the front portion, and the fingerprint sensor is provided on one of (i) the front portion of the computing device and underneath the presence-sensitive display device, (ii) the one or more side portions of the computing device as part of a solid-state button, or (iii) the back portion of the computing device.

11. The method of any of claims 1-10, wherein outputting the sequence of haptic signals with varying intensity comprises outputting, by the computing device and over the first defined period of time, each haptic signal in the sequence followed by a respective pause period during which no haptic signal is output, and optionally wherein:
the pause periods that occur between respective haptic signals in the sequence decrease in duration over the first defined period of time, and
outputting the sequence of haptic signals with varying intensity comprises outputting, by the computing device and over the first defined period of time, the sequence of haptic signals with varying intensity and increasing speed.

12. The method of any of claims 1-11, wherein:
the computing device determines that the finger of the user is positioned at the fingerprint sensor based on input received from one or more of the fingerprint sensor or a presence-sensitive display device; and/or
obtaining the fingerprint data comprises obtaining, by the computing device and from the fingerprint sensor, at least a portion of the fingerprint data during the first defined period of time.

13. The method of any of claims 1-12, further comprising:
obtaining, by the computing device, reference fingerprint data associated with a fingerprint of a finger of an enrolled user; and
responsive to determining a match between the reference fingerprint data and the fingerprint data associated with the fingerprint of the finger of the user, authenticating, by the computing device, the user; and
optionally wherein the method further comprises:
responsive to authenticating the user, performing, by the computing device, one or more operations, wherein the one or more operations comprise one or more of (i) an unlock operation associated with unlocking the computing device, or (ii) an access operation associated with accessing one or more applications executed by the computing device.

14. A computing device (100; 200; 400), comprising:
a fingerprint sensor (104),
a haptic actuator (106),
at least one processor (440); and
a computer-readable storage device (458) configured to store instructions that are executable using the at least one processor to perform the method of any of claims 1-13.

15. A computer program product including instructions that, when executed by a computing device (100; 200; 400) according to claim 14, cause at least one processor of the computing device (100; 200; 400) to perform the method of any of claims 1-13.

## Patentansprüche

1. Verfahren (800), umfassend:
als Reaktion auf das Bestimmen, dass ein Finger eines Benutzers an einem Fingerabdrucksensor (104; 204; 404) positioniert ist, Initiieren (802) eines Fingerabdruckerfassungsvorgangs, der dem Fingerabdrucksensor zugeordnet ist, durch eine Rechenvorrichtung (100; 200; 400);
Ausgeben (804) einer Sequenz von haptischen Signalen mit variierender Intensität durch die Rechenvorrichtung und über einen ersten definierten Zeitraum, wobei jedes haptische Signal in der Sequenz eine Intensität aufweist, die sich von einer entsprechenden Intensität eines zuvor in der Sequenz ausgegebenen haptischen Signals unterscheidet;
Erlangen (806) von Fingerabdruckdaten, die einem Fingerabdruck des Fingers des Benutzers zugeordnet sind, durch die Rechenvorrichtung und von dem Fingerabdrucksensor;
Bestimmen (808) durch die Rechenvorrichtung, ob der Finger des Benutzers nach Abschluss des Fingerabdruckerfassungsvorgangs noch an dem Fingerabdrucksensor positioniert ist; und
als Reaktion auf das Bestimmen, dass der Finger des Benutzers nach Abschluss des Fingerabdruckerfassungsvorgangs noch an dem Fingerabdrucksensor positioniert ist, Ausgeben (810) eines diskreten haptischen Signals durch die Rechenvorrichtung, um einen erfolgreichen Abschluss des Fingerabdruckerfassungsvorgangs anzugeben,
wobei das Verfahren ferner Folgendes umfasst:
nach Ausgeben der Sequenz von haptischen Signalen mit variierender Intensität Unterlassen des Ausgebens jeglicher haptischer Signale durch die Rechenvorrichtung und für einen zweiten definierten Zeitraum vor Ausgeben des diskreten haptischen Signals.

2. Verfahren nach Anspruch 1,
wobei das Ausgeben der Sequenz von haptischen Signalen mit variierender Intensität Ausgeben der Sequenz von haptischen Signalen mit zunehmender Intensität durch die Rechenvorrichtung und über den ersten definierten Zeitraum umfasst, wobei die Intensität jedes haptischen Signals in der Sequenz größer ist als die jeweilige Intensität eines zuvor in der Sequenz ausgegebenen haptischen Signals, und
wobei das diskrete haptische Signal eine Intensität aufweist, die größer ist als die jeweilige Intensität eines haptischen Signals, das in der Sequenz der haptischen Signale enthalten ist.

3. Verfahren nach einem der Ansprüche 1 bis 2, ferner umfassend: Bestimmen eines Fingerabdruckerfassungszeitraums für den Abschluss des Fingerabdruckerfassungsvorgangs durch die Rechenvorrichtung und Bestimmen des ersten definierten Zeitraums, über den die Sequenz haptischer Signale mit variierender Intensität auszugeben ist, durch die Rechenvorrichtung auf Grundlage des Fingerabdruckerfassungszeitraums.

4. Verfahren nach einem der Ansprüche 1 bis 2, ferner umfassend: als Reaktion auf das Bestimmen, dass der Finger des Benutzers vor oder nach Abschluss des Fingerabdruckerfassungsvorgangs nicht mehr auf dem Fingerabdrucksensor positioniert ist, Ausgeben mehrerer diskreter haptischer Signale mit variierender Intensität durch die Rechenvorrichtung, um anzugeben, dass der Fingerabdruckerfassungsvorgang nicht erfolgreich abgeschlossen wurde.

5. Verfahren nach einem der Ansprüche 1 bis 4, ferner umfassend: während des Ausgebens der Sequenz von haptischen Signalen mit variierender Intensität Ausgeben einer visuellen Sequenz von Bildern durch die Rechenvorrichtung und über den ersten definierten Zeitraum und zur Anzeige auf einer anwesenheitsempfindlichen Anzeigevorrichtung.

6. Verfahren nach Anspruch 5,
wobei Bilder in der visuellen Bildsequenz mit variierender Intensität ausgegeben werden, wobei jedes der Bilder in der visuellen Bildsequenz eine Intensität aufweist, die sich von einer entsprechenden Intensität eines zuvor in der visuellen Bildsequenz ausgegebenen Bildes unterscheidet.

7. Verfahren nach Anspruch 6,
wobei das Ausgeben der Sequenz von haptischen Signalen Ausgeben der Sequenz von haptischen Signalen mit zunehmender Intensität durch die Rechenvorrichtung und über den ersten definierten Zeitraum umfasst, wobei die Intensität jedes haptischen Signals in der Sequenz größer ist als die jeweilige Intensität eines zuvor in der Sequenz ausgegebenen haptischen Signals, und
wobei das Ausgeben der visuellen Bildsequenz Ausgeben der visuellen Bildsequenz mit zunehmender Intensität durch die Rechenvorrichtung und über den ersten definierten Zeitraum zur Anzeige auf der anwesenheitsempfindlichen Anzeigevorrichtung umfasst, wobei die Intensität jedes Bildes in der visuellen Bildsequenz größer ist als die jeweilige Intensität eines zuvor in der visuellen Bildsequenz ausgegebenen Bildes; und wobei optional:
das Ausgeben der visuellen Sequenz von Bildern mit zunehmender Intensität Ausgeben einer visuellen Animation, die sich beschleunigt, wenn sich die visuelle Animation dem Abschluss nähert, durch die Rechenvorrichtung und über den ersten definierten Zeitraum zur Anzeige auf der anwesenheitsempfindlichen Anzeigevorrichtung umfasst, um einen visuellen Effekt zu erzeugen, der den erfolgreichen Abschluss des Fingerabdruckerfassungsvorgangs angibt, und
das Verfahren ferner nach dem Ausgeben der visuellen Animation Durchführen eines Entsperrungsvorgangs durch die Rechenvorrichtung umfasst, der dem Entsperren der Rechenvorrichtung zugeordnet ist.

8. Verfahren nach Anspruch 5, wobei das Ausgeben der visuellen Bildsequenz Ausgeben der visuellen Bildsequenz durch die Rechenvorrichtung und über den ersten definierten Zeitraum zur Anzeige auf der anwesenheitsempfindlichen Anzeigevorrichtung umfasst, um unvollständige Bildteile eines visuellen Rings zu bilden, der um einen Bereich der anwesenheitsempfindlichen Anzeigevorrichtung angezeigt wird, der dem Fingerabdrucksensor zugeordnet ist, und wobei das Verfahren optional ferner umfasst, dass während des Ausgebens des diskreten haptischen Signals durch die Rechenvorrichtung und zur Anzeige auf der anwesenheitsempfindlichen Anzeigevorrichtung ein diskretes Bild ausgegeben wird, das eine Gesamtheit des visuellen Rings umfasst.

9. Verfahren nach Anspruch 5, wobei das Ausgeben der visuellen Bildsequenz Ausgeben der visuellen Bildsequenz durch die Rechenvorrichtung und über den ersten definierten Zeitraum zur Anzeige auf der anwesenheitsempfindlichen Anzeigevorrichtung umfasst, um konzentrische Ringe zu bilden, die um einen Bereich der anwesenheitsempfindlichen Anzeigevorrichtung angezeigt werden, der dem Fingerabdrucksensor zugeordnet ist, und wobei das Verfahren optional ferner Folgendes umfasst:
während des Ausgebens des diskreten haptischen Signals Unterlassen des Ausgebens von Bildern um den Bereich der anwesenheitsempfindlichen Anzeigevorrichtung, der dem Fingerabdrucksensor zugeordnet ist, durch die Rechenvorrichtung.

10. Verfahren nach einem der Ansprüche 1 bis 9, wobei:
der Fingerabdrucksensor einen optischen Scanner, einen kapazitiven Scanner oder einen Ultraschallscanner umfasst und die Fingerabdruckdaten Daten umfassen, die den Fingerabdruck des Fingers des Benutzers darstellen, wobei die Fingerabdruckdaten von dem optischen Scanner, dem kapazitiven Scanner oder dem Ultraschallscanner bereitgestellt werden; und/oder
die Rechenvorrichtung einen vorderen Abschnitt, einen dem vorderen Abschnitt gegenüberliegenden hinteren Abschnitt und einen oder mehrere Seitenabschnitte aufweist, die Rechenvorrichtung eine anwesenheitsempfindliche Anzeigevorrichtung beinhaltet, die auf dem vorderen Abschnitt bereitgestellt ist, und der Fingerabdrucksensor auf einem von (i) dem vorderen Abschnitt der Rechenvorrichtung und unterhalb der anwesenheitsempfindlichen Anzeigevorrichtung, (ii) dem einen oder den mehreren Seitenabschnitten der Rechenvorrichtung als Teil einer Festkörpertaste oder (iii) dem hinteren Abschnitt der Rechenvorrichtung bereitgestellt ist.

11. Verfahren nach einem der Ansprüche 1 bis 10, wobei das Ausgeben der Sequenz von haptischen Signalen mit variierender Intensität Ausgeben jedes haptischen Signals in der Sequenz, gefolgt von einer entsprechenden Pausenperiode, während der kein haptisches Signal ausgegeben wird, durch die Rechenvorrichtung und über den ersten definierten Zeitraum umfasst, und wobei optional:
die Pausenperioden, die zwischen den jeweiligen haptischen Signalen in der Sequenz auftreten, in dem ersten definierten Zeitraum immer kürzer werden, und
das Ausgeben der Sequenz von haptischen Signalen mit variierender Intensität Ausgeben der Sequenz von haptischen Signalen mit variierender Intensität und zunehmender Geschwindigkeit durch die Rechenvorrichtung über den ersten definierten Zeitraum umfasst.

12. Verfahren nach einem der Ansprüche 1 bis 11, wobei:
die Rechenvorrichtung bestimmt, dass der Finger des Benutzers an dem Fingerabdrucksensor positioniert ist, auf Grundlage einer Eingabe, die von einem oder mehreren von dem Fingerabdrucksensor oder einer anwesenheitsempfindlichen Anzeigevorrichtung empfangen wird; und/oder
das Erlangen der Fingerabdruckdaten Erlangen mindestens eines Teils der Fingerabdruckdaten während des ersten definierten Zeitraums durch die Rechenvorrichtung und von dem Fingerabdrucksensor umfasst.

13. Verfahren nach einem der Ansprüche 1 bis 12, ferner umfassend:
Erlangen von Referenz-Fingerabdruckdaten, die einem Fingerabdruck eines Fingers eines registrierten Benutzers zugeordnet sind, durch die Rechenvorrichtung; und
als Reaktion auf das Bestimmen einer Übereinstimmung zwischen den Referenz-Fingerabdruckdaten und den Fingerabdruckdaten, die dem Fingerabdruck des Fingers des Benutzers zugeordnet sind, Authentifizieren des Benutzers durch die Rechenvorrichtung; und
wobei das Verfahren optional ferner Folgendes umfasst:
als Reaktion auf das Authentifizieren des Benutzers Durchführen einer oder mehrerer Vorgänge durch die Rechenvorrichtung, wobei der eine oder die mehreren Vorgänge eines oder mehrere von Folgendem umfasst: (i) einen Entsperrungsvorgang, der dem Entsperren der Rechenvorrichtung zugeordnet ist, oder (ii) einen Zugriffsvorgang, der dem Zugreifen auf eine oder mehrere Anwendungen zugeordnet ist, die von der Rechenvorrichtung ausgeführt werden.

14. Rechenvorrichtung (100; 200; 400), umfassend:
einen Fingerabdrucksensor (104), einen haptischen Aktor (106), mindestens einen Prozessor (440); und
eine computerlesbare Speichervorrichtung (458), die dazu konfiguriert ist, Anweisungen zu speichern, die unter Verwendung des mindestens einen Prozessors ausführbar sind, um das Verfahren nach einem der Ansprüche 1 bis 13 durchzuführen.

15. Computerprogrammprodukt, das Anweisungen beinhaltet, die bei Ausführung durch eine Rechenvorrichtung (100; 200; 400) nach Anspruch 14 mindestens einen Prozessor der Rechenvorrichtung (100; 200; 400) dazu veranlassen, das Verfahren aus einem der Ansprüche 1 bis 13 durchzuführen.

## Revendications

1. Procédé (800) comprenant :
en réponse à la détermination qu'un doigt d'un utilisateur est positionné sur un détecteur d'empreintes digitales (104 ; 204 ; 404), l'initiation (802), par un dispositif informatique (100 ; 200 ; 400), d'une opération de détection d'empreintes digitales qui est associée au détecteur d'empreintes digitales ;
l'émission (804), par le dispositif informatique et sur une première période de temps définie, d'une séquence de signaux haptiques avec une intensité variable, dans lequel chaque signal haptique de la séquence a une intensité différente d'une intensité respective de tout signal haptique précédemment émis dans la séquence ;
l'obtention (806), par le dispositif informatique et à partir du détecteur d'empreintes digitales, de données d'empreintes digitales qui sont associées à une empreinte digitale du doigt de l'utilisateur ;
le fait de déterminer (808), par le dispositif informatique, si le doigt de l'utilisateur est toujours positionné sur le détecteur d'empreintes digitales à la fin de l'opération de détection d'empreintes digitales ; et
en réponse à la détermination que le doigt de l'utilisateur est toujours positionné sur le détecteur d'empreintes digitales à la fin de l'opération de détection d'empreintes digitales, l'émission (810), par le dispositif informatique, d'un signal haptique discret pour indiquer la fin réussie de l'opération de détection d'empreintes digitales,
dans lequel le procédé comprend également :
après l'émission de la séquence de signaux haptiques avec une intensité variable, l'abstention, par le dispositif informatique et pendant une seconde période de temps définie, d'émettre tout signal haptique avant d'émettre le signal haptique discret.

2. Procédé selon la revendication 1,
dans lequel l'émission de la séquence de signaux haptiques avec une intensité variable comprend l'émission, par le dispositif informatique et sur la première période de temps définie, de la séquence de signaux haptiques avec une intensité croissante, l'intensité de chaque signal haptique de la séquence étant supérieure à l'intensité respective d'un quelconque signal haptique précédemment émis dans la séquence, et
dans lequel le signal haptique discret a une intensité qui est supérieure à l'intensité respective de tout signal haptique inclus dans la séquence de signaux haptiques.

3. Procédé selon l'une quelconque des revendications 1 et 2, comprenant également :
la détermination, par le dispositif informatique, d'une période de temps de détection d'empreintes digitales pour la fin de l'opération de détection d'empreintes digitales, et la détermination, par le dispositif informatique sur la base de la période de temps de détection d'empreintes digitales, de la première période de temps définie sur laquelle émettre la séquence de signaux haptiques avec une intensité variable.

4. Procédé selon l'une quelconque des revendications 1 et 2, comprenant également :
en réponse à la détermination que le doigt de l'utilisateur n'est plus positionné sur le détecteur d'empreintes digitales avant ou à la fin de l'opération de détection d'empreintes digitales, l'émission, par le dispositif informatique, de multiples signaux haptiques discrets d'intensité variable pour indiquer la fin réussie de l'opération de détection d'empreintes digitales.

5. Procédé selon l'une quelconque des revendications 1 à 4, comprenant également :
lors de l'émission de la séquence de signaux haptiques avec une intensité variable, l'émission, par le dispositif informatique et sur la première période de temps définie, et pour affichage sur un dispositif d'affichage sensible à la présence, d'une séquence visuelle d'images.

6. Procédé selon la revendication 5,
dans lequel les images dans la séquence visuelle d'images sont émises avec une intensité variable, chacune des images dans la séquence visuelle d'images ayant une intensité qui est différente d'une intensité respective de toute image qui a été précédemment émise dans la séquence visuelle d'images.

7. Procédé selon la revendication 6,
dans lequel l'émission de la séquence de signaux haptiques comprend l'émission, par le dispositif informatique et sur la première période de temps définie, de la séquence de signaux haptiques avec une intensité croissante, l'intensité de chaque signal haptique de la séquence étant supérieure à l'intensité respective de tout signal haptique précédemment émis dans la séquence, et
dans lequel l'émission de la séquence visuelle d'images comprend l'émission, par le dispositif informatique et sur la première période de temps définie, pour affichage sur le dispositif d'affichage sensible à la présence, de la séquence visuelle d'image avec une intensité croissante, l'intensité de chacune des images de la séquence visuelle d'images étant supérieure à l'intensité respective de toute image précédemment émise dans la séquence visuelle d'images ; et éventuellement dans lequel : l'émission de la séquence visuelle d'images avec une intensité croissante comprend l'émission, par le dispositif informatique et sur la première période de temps définie, pour affichage sur le dispositif d'affichage sensible à la présence, d'une animation visuelle qui s'accélère à mesure que l'animation visuelle approche de la fin afin de créer un effet visuel pour indiquer la fin réussie de l'opération de détection d'empreintes digitales, et
le procédé comprend également, après l'émission de l'animation visuelle, l'exécution, par le dispositif informatique, d'une opération de déverrouillage associée au déverrouillage du dispositif informatique.

8. Procédé selon la revendication 5, dans lequel l'émission de la séquence visuelle d'images comprend l'émission, par le dispositif informatique et sur la première période de temps définie, pour affichage sur le dispositif d'affichage sensible à la présence, de la séquence visuelle d'images pour former des parties d'image incomplètes d'un anneau visuel affiché autour d'une région du dispositif d'affichage sensible à la présence qui est associée au détecteur d'empreintes digitales, et éventuellement dans lequel le procédé comprend également, tout en émettant le signal haptique discret, l'émission, par le dispositif informatique et pour affichage sur le dispositif d'affichage sensible à la présence, d'une image discrète comprenant la totalité de l'anneau visuel.

9. Procédé selon la revendication 5, dans lequel l'émission de la séquence visuelle d'images comprend l'émission, par le dispositif informatique et sur la première période de temps définie, pour affichage sur le dispositif d'affichage sensible à la présence, de la séquence visuelle d'images pour former des anneaux concentriques qui sont affichés autour d'une région du dispositif d'affichage sensible à la présence qui est associée au détecteur d'empreintes digitales, et éventuellement dans lequel le procédé comprend également :
lors de l'émission du signal haptique discret, le fait que le dispositif informatique s'abstient d'émettre une quelconque image autour de la région du dispositif d'affichage sensible à la présence qui est associée au détecteur d'empreintes digitales.

10. Procédé selon l'une quelconque des revendications 1 à 9, dans lequel :
le détecteur d'empreintes digitales comprend l'un d'un scanner optique, d'un scanner capacitif ou d'un scanner à ultrasons et les données d'empreintes digitales comprennent des données représentant l'empreinte digitale du doigt de l'utilisateur, les données d'empreintes digitales étant fournies par l'un du scanner optique, du scanner capacitif ou du scanner à ultrasons ; et/ou
le dispositif informatique a une partie avant, une partie arrière opposée à la partie avant et une ou plusieurs parties latérales, le dispositif informatique comporte un dispositif d'affichage sensible à la présence qui est prévu sur la partie avant, et le détecteur d'empreintes digitales est prévu sur l'une (i) de la partie avant du dispositif informatique et sous le dispositif d'affichage sensible à la présence, (ii) des une ou plusieurs parties latérales du dispositif informatique en tant que partie d'un bouton à semi-conducteurs, ou (iii) de la partie arrière du dispositif informatique.

11. Procédé selon l'une quelconque des revendications 1 à 10, dans lequel l'émission de la séquence de signaux haptiques avec une intensité variable comprend l'émission, par le dispositif informatique et sur la première période de temps définie, de chaque signal haptique de la séquence suivi d'une période de pause respective pendant laquelle aucun signal haptique n'est émis, et éventuellement dans lequel :
les périodes de pause qui se produisent entre des signaux haptiques respectifs diminuent en durée de séquence sur la première période de temps définie, et
l'émission de la séquence de signaux haptiques avec une intensité variable comprend l'émission, par le dispositif informatique et sur la première période de temps définie, de la séquence de signaux haptiques avec une intensité variable et une vitesse croissante.

12. Procédé selon l'une quelconque des revendications 1 à 11, dans lequel:
le dispositif informatique détermine que le doigt de l'utilisateur est positionné sur le détecteur d'empreintes digitales sur la base d'une entrée reçue d'un ou de plusieurs du détecteur d'empreintes digitales ou d'un dispositif d'affichage sensible à la présence ; et/ou
l'obtention des données d'empreintes digitales comprend l'obtention, par le dispositif informatique et à partir du détecteur d'empreintes digitales, d'au moins une partie des données d'empreintes digitales pendant la première période de temps définie.

13. Procédé selon l'une quelconque des revendications 1 à 12, comprenant également :
l'obtention, par le dispositif informatique, de données d'empreinte digitale de référence associées à une empreinte digitale d'un doigt d'un utilisateur inscrit ; et
en réponse à la détermination d'une correspondance entre les données d'empreinte digitale de référence et les données d'empreinte digitale associées à l'empreinte digitale du doigt de l'utilisateur, l'authentification, par le dispositif informatique, de l'utilisateur ; et
éventuellement dans lequel, le procédé comprend également :
en réponse à l'authentification de l'utilisateur, l'exécution, par le dispositif informatique, d'une ou plusieurs opérations, dans lequel les une ou plusieurs opérations comprennent l'une ou plusieurs des opérations suivantes : (i) une opération de déverrouillage associée au déverrouillage du dispositif informatique, ou (ii) une opération d'accès associée à l'accès à une ou plusieurs applications exécutées par le dispositif informatique.

14. Dispositif informatique (100 ; 200 ; 400), comprenant :
un détecteur d'empreintes digitales (104),
un actionneur haptique (106),
au moins un processeur (440) ; et
un dispositif de stockage lisible par ordinateur (458) configuré pour stocker des instructions qui sont exécutables à l'aide de l'au moins un processeur pour réaliser le procédé selon l'une quelconque des revendications 1 à 13.

15. Produit de programme informatique comportant des instructions qui, lorsqu'elles sont exécutées par un dispositif informatique (100 ; 200 ; 400) selon la revendication 14, amènent l'au moins un processeur du dispositif informatique (100 ; 200 ; 400) à réaliser le procédé selon l'une quelconque des revendications 1 à 13.
